# EUROPEAN PATENT APPLICATION

(11) **EP 4 596 589 A1**
(43) Date of publication of application: **06.08.2025**
(21) Application number: 24206375.8
(22) Date of filing: 14.10.2024
(51) Int. Cl.: C08F 8/06, C08F 8/50, C08J 11/12

(54) **PROCESS FOR PREPARING POLYETHYLENE AND POLYPROPYLENE POLYOLEFIN WAXES BY THERMAL DEPOLYMERIZATION OF POLYETHYLENE AND POLYPROPYLENE THERMOPLASTIC RESINS HAVING CHARACTERISTICS OF ACCELERATED BIODEGRADABILITY**

(30) Priority: 30.01.2024 BR 102024001909
(71) Applicant: Megh Indústria e Comêrcio Ltda., 04220-001 São Paulo SP (BR)
(72) Inventor: MOTTA DITTMER, Ricardo, SP 04928-110 São Paulo (BR); LOURENÇO DE OLIVEIRA, Adilson, SP 09112-280 Santo Andre (BR)
(74) Representative: Boskovic, Davor

(57) **Abstract**

This invention refers to a process for preparing polyethylene and polypropylene polyolefin waxes by thermal depolymerization of polyethylene and polypropylene thermoplastic resins, and particularly preparing polyethylene waxes within a certain viscosity range and molecular weight that transform them into 100% biodegradable polyethylene waxes in a short period of time (less than 30 days); the depolymerization process also demonstrates that the reaction of polyethylene thermoplastic resins to prepare polyethylene waxes will provide a specific chemical transformation in the molecules of the polyethylene wax obtained, making them subject to subsequent oxidation through a very fast, cost-effective and high-yield process; the oxidized polyethylene waxes obtained has excellent quality and are also waxes with biodegradability characteristics in a short period of time, such as the original non-oxidized waxes; such oxidized waxes, having biodegradability characteristics in a short period of time, can subsequently be emulsified or dispersed in an aqueous medium, while maintaining the biodegradability characteristics in a short period of time, just like the original oxidized waxes, and enabling the use thereof in liquid, semi-pasty or pasty form.

## Description

### FIELD OF APPLICATION

The present invention relates to a process for preparing polyethylene and polypropylene polyolefin waxes by thermal depolymerization of polyethylene and polypropylene thermoplastic resins, having accelerated biodegradability, thus integrating the field of chemical processes aimed at the segment for producing this type of wax.

### INTRODUCTION

This invention refers to a process for preparing polyethylene and polypropylene polyolefin waxes by thermal depolymerization of polyethylene and polypropylene thermoplastic resins, and particularly preparing polyethylene waxes within a certain range of viscosity and molecular weight, which transform them into 100% biodegradable polyethylene waxes in a short period of time (less than 30 days).

The thermoplastic resins may originate from virgin petrochemical resins from naphtha or any other type of process that generates a raw material that can produce these polyethylene and polypropylene resins, off-grade petrochemical resins, industrial post-consumer waste (also known as shavings or other names commonly applied by the market to this waste) and urban post-consumer waste (also known as urban plastic waste); or any type of mixture thereof, in any proportion, which may vary between 1% and 99% proportion for each type of material, or any source of polyethylene and polypropylene resin that allows subsequent use thereof in this type of process, which is the object of this patent application.

The depolymerization process, which is the object of this patent application, also demonstrates that reacting polyethylene thermoplastic resins to prepare polyethylene waxes, as described in this patent, will provide a specific chemical transformation in the molecules of the polyethylene wax obtained, making them subject to subsequent oxidation through a very fast, cost-effective and high-yield process.

The oxidized polyethylene waxes thus obtained are of excellent quality and are also waxes with biodegradability characteristics in a short period of time, just like the original non-oxidized waxes.

Such oxidized waxes, having biodegradability characteristics in a short period of time, may subsequently be emulsified or dispersed in an aqueous medium, while maintaining the biodegradability characteristics in a short period of time, just like the original oxidized waxes, enabling the use thereof in liquid, semi-pasty or pasty form and expanding the range of possible uses in the different types of applications that require the employment and use thereof.

Polyethylene waxes known on the market may be obtained by different ways, the most traditional one being the ethylene polymerization process, whether of petrochemical origin or not. This type of production route generates well-defined materials in terms of main characteristics thereof, which are:
- molecular weight (Mw).
- viscosity at a given temperature, generally 140°C.
- melting point (°C).
- dropping point (°C).
- softening point (°C).
- density (g/cm³).
- hardness (dmm).
- crystallinity (%).
- among others.

In the polyethylene wax polymerization process, it is possible to obtain different types of polyethylene waxes, which may be low-density polyethylene waxes (LDPE) or high-density polyethylene waxes (HDPE).

Another way of obtaining polyethylene waxes is through a by-product formed during the polymerization of high-density polyethylene (HDPE) resin, via the slurry process, known and patented as the Mitsui process and Hostalen process. These processes generate a considerable amount of by-products that can be subsequently refined and sold on a medium and large scale. In other high-density polyethylene (HDPE) polymerization processes, these by-product materials do not form at levels capable of making this type of material commercially viable on a medium and large scale. Such polyethylene waxes are known in the state of the art and are called on the market as waxes originating from scrap or lumps, or any other nomenclature that can be used for these polyethylene waxes originating from the manufacture of high-density polyethylene (HDPE) thermoplastic resin. In this obtaining route, the materials generated are not well defined in terms of main characteristics thereof, which are:
- molecular weight (Mw).
- viscosity at a given temperature, generally 140°C.
- melting point (°C).
- dropping point (°C).
- softening point (°C).
- density (g/cm³).
- hardness (dmm).
- crystallinity (%).
- among others.

Furthermore, the type of by-product generated will depend on a number of variables and the product mix produced in each high-density polyethylene (HDPE) thermoplastic resin manufacturing unit. Polyethylene waxes produced from such materials will require high process losses and also high refining costs, and reproducibility from batch to batch will not be guaranteed, unless the manufacturer of waxes with this type of material has a very clear and well-defined production process and a massive experience with the different types of raw materials existing and currently available.

A third way of producing polyethylene waxes is through the depolymerization or cracking of polyethylene thermoplastic resins. This type of production route is capable of producing waxes with the main characteristics necessary to supply the market, which are:
- molecular weight (Mw).
- viscosity at a given temperature, generally 140°C.
- melting point (°C).
- dropping point (°C).
- softening point (°C).
- density (g/cm³).
- hardness (dmm).
- crystallinity (%).
- among others; very similar to polyethylene waxes obtained through the polymerization process.

In this type of production route, the choice of material to be used as raw material is very important in defining the final characteristics of the wax obtained.

The type of raw material used in this production route may be virgin petrochemical resins from naphtha or any other type of process that generates a raw material that can produce these polyethylene resins, off-grade petrochemical resins, industrial post-consumer waste (also known as shavings or other names commonly applied by the market to this waste) and urban post-consumer waste (also known as urban plastic waste); or any type of mixture thereof, in any proportion, or any source of polyethylene resin that allows subsequent use thereof in this type of process, which is the object of this patent application.

Several are the advantages of using a depolymerization or cracking process of polyethylene thermoplastic resins instead of the traditional process through polymerization or even through the use of a by-product formed during the polymerization of high-density polyethylene (HDPE) resin via the slurry process, known and patented as Mitsui process and Hostalen process, and the following can be cited:
- final products with quality characteristics very similar to materials produced by polymerization (high quality).
- modular production cells (tons/year) with much less volume when compared to the traditional polymerization process.
- initial costs of capital invested for production are much lower.
- process technology that is less dependent on licensing, as in some cases it does not depend on the use of catalysts to achieve the final product.
- better flexibility for producing different types of materials, as the production scale is smaller and more flexible than a polymerization plant; and
- greater flexibility in implementing production centers in different geographic regions due to the above regarding production scale and initial cost of capital invested.

For all the reasons explained above, it is understood that the process for producing a polyethylene or polypropylene wax through depolymerization and/or cracking of polyethylene or polypropylene thermoplastic resins presents itself as a more interesting and flexible production system when compared to other polymerization and by-product refining processes already existing in the state of the art.

### STATE OF THE ART

There are several patents describing the manufacture of polyethylene waxes through the three types of processes described above. Some of them can be mentioned herein in a non-limiting way.

The Chinese Patent CN 105924552, "Method for Continuously Producing Polyethylene Wax", refers to a process for producing polyethylene wax by thermal depolymerization. Unlike the patent process applied for herein, this patent teaches the use of an external rotating self-stirring centrifugal mass transfer reaction boiler and the need to use an Al-MCM-48 catalyst system, a mesoporous material, generally used as pyrolysis catalysts. The Al-MCM-48 catalyst is an inorganic catalyst and has a double helix three-dimensional pore channel structure, has excellent transmission performance and can be seen from macromolecular catalysis and adsorption and decomposition angles. The Al-MCM-48 is used as it is superior to the MCM-41 catalyst. The special pore passage is not blocked, which is more beneficial to improving the mass transfer rate of reactants. The use of catalyst systems, even in small quantities, tends to be an economic obstacle due to the high cost of these types of materials. The temperature used in this patent is within the range of 150°C to 300°C ± 5°C. The patent mentions that the *"polyethylene that is not fully reacted"* is separated by a separator and continues to react in the reactor and that *"an amount of substances with a low boiling point that needs to be extracted'* is generated, as well as the production of a certain amount of *"smoke"* that needs to be treated for disposal. The process describes that a four-hour reaction is required, thus being a batch process. It also mentions that the final polyethylene wax obtained has a yellow color.

The Chinese Patent CN 108380168, "Continuous Production Equipment for Cracked Polyethylene Wax", is a Chinese patent that describes in detail a system similar to an extruder for the continuous production of polyethylene wax via cracking, but it does not detail what type of wax is obtained, as well as the characteristics thereof, *i.e.,* it does not specify the type of material, being merely an equipment patent.

The Chinese Patent CN 108772034, "Production Technology of Polyethylene Wax", describes a process for producing polyethylene wax very similar to the Patent CN 105924552. By using a catalyst of the Al-MCM-48 type, the amount of use thereof, the process temperature, among others, are very similar factors. What basically differentiate them is the type of equipment used to generate the polyethylene wax.

The Chinese Patent CN110423296, "Preparation Method of Refined Macromolecular Polyethylene Wax", describes the production of a refined high-weight molecular polyethylene wax using a reactor. A solvent system is added to this reactor, which can be methyl ethyl ketone, also known as MEK or Tetrahydrofuran. The reaction temperature is within the range of 180°C to 230°C. The system is kept under stirring, and later on this system is transferred to a high temperature degradation machine where a protective gas is injected, which can be nitrogen or argon, and the system is pressurized at a pressure between 5 and 10 Mpa. The patent claims a simple and more environmentally friendly method, but the claims do not seem to be in line with how the process was described.

The Chinese Patent CN 113698512, "Polyethylene Cracking Preparation Method for polyethylene Wax", describes a method for obtaining polyethylene wax from the cracking of polyethylene resin. The process describes the need to use a polyethylene resin together with waste recycled polyethylene resin to form a mixture. Subsequently, the process describes the use of a Fischer Tropsch wax for pre-treatment, and argon gas as an inert gas. The process temperature described is set between 375°C and 385°C.

The Chinese Patent CN 115651268, "Method for Preparing Polyethylene Wax by Continuously Cracking Waste Polyethylene", describes the continuous cracking of polyethylene resin at a temperature of 300°C to 500°C. According to the patent, polyethylene resin waste is first treated via granulation and grinding and then cracked. The patent describes the use, during cracking, of an inert gas, which may be nitrogen, helium or argon. The process temperature is described within the range of 350°C to 450°C. Said wax also goes through a refining step, which can be filtration, modification by oxidation and hydrotreatment, solvent refining, adsorption refining and spray drying. The patent mentions the use of a solvent in refining, which may be n-hexane, petroleum ether, n-dodecane, methylcyclohexane, decahydronaphthalene, toluene, xylene, ethanol, acetone, butanone and methyl isobutyl ketone. The patent mentions the use of a filter system, with the filter screen being made of metal or ceramic and filtration being done using a melting filter, having a filtration accuracy varying within the range of 0.1 - 50 µm. The patent also describes the use of a catalyst system, which may be MCM-41, MCM-48, SAPO molecular sieve, ZSM molecular sieve, CaCO₃ or aluminosilicate system. The patent is described as a simple process, but it has some refining steps, which certainly makes simplicity difficult and increases operational costs. The patent refers to a refining step by oxidation in a hydrogen peroxide solution within the range of 25% to 35% by weight, in a temperature range between 75°C and 95°C. It also teaches a hydrogen hydrotreatment step in a temperature range between 250°C and 350°C.

The Chinese Patent CN 209791501, "Variable Frequency Heating Equipment for Cracking Polyethylene Wax", describes the use of an equipment similar to an extruder for cracking a polyethylene resin into a polyethylene wax.

The Chinese Patent CN 213493663, "Continuous Production Equipment for Cracked Polyethylene Wax", also describes the use of very similar equipment as described in Chinese Patent CN 209791501, and claims the use of this production device citing that it is a technique that overcomes the disadvantages of prior techniques.

The Chinese Patent CN 213699840, "Polyethylene Wax Cracking Reaction Kettle", proposes to solve the problem of inconvenient feeding of a polyethylene resin cracking reaction vessel in the prior art. The device used by this patent comprises a tank body and a vessel body heated by a boiler.

The Chinese Patent CN 214514531U, "Polyethylene Wax Cracking and Forming Device", describes a stirred reactor used for cracking polyethylene resin into polyethylene wax. The patent describes the use of an inert gas during the process.

The Chinese Patent CN 216260656, "Reactor for Preparing Polyethylene Wax by Cracking Waste Polyethylene", describes a reactor for recycling polyethylene waste, and according to the patent, it will be used to solve the problem in the prior art where polyethylene from waste is prone to coking during cracking. The process uses inert nitrogen gas. The process also uses organic solvent. The patent describes the use of a filter screen in the reactor.

The Chinese Patent CN 217288373U, "Polyethylene Wax Cracking and Forming Device", also describes the use of very similar equipment as described in Chinese Patent CN 209791501, and claims a feeding and dosing system for the same.

The Chinese Patent CN 218689294, "Equipment for Preparing Polyethylene Wax by Continuously Cracking Waste Polyethylene", describes an equipment for continuously recycling polyethylene waste, and according to the patent, it will be used to solve the problem in the prior art where polyethylene from waste is prone to coking during cracking. The system described in this patent sequentially comprises a raw material pretreatment device, a continuous cracking reactor, a separator and a refining tank that are in communication with the material to be processed. The patent describes the use of an inert gas during cracking to provide a gas-protected environment and the use of an oversized vent for an alumina powder as a cracking catalyst. The continuous cracking reactor is a tubular reactor operating at a temperature of 350°C. The patent also describes a filtration system. The patent further describes a hydrorefining step. The polyethylene wax obtained, as described in this patent, is initially colored and has an odor, requiring subsequent refining steps to achieve better quality. Patent main claim is a device for preparing polyethylene wax by continuously cracking resin from waste polyethylene. The patent basically describes the equipment and process to be used, but it does not describe or characterize the type of material that will be produced by it, other than in a very generic way.

The French Patent FR 2613721, "Process for the Manufacture of Artificial Waxes", refers to the production of artificial waxes through the thermal decomposition of polyethylene and polypropylene plastic resins. The process temperature ranges from 360°C to 500°C. The patent simply mentions: *"process according to any of the previous claims, wherein the artificial waxes obtained are artificial polyethylene or polypropylene waxes already known in the art, but previously obtained by different methods".* The process is characterized by polyethylene or polypropylene resins being hot injected into a steel tube, in a upright position, heated in the presence of water vapor at a temperature of 450°C to 500°C. The polyethylene or polypropylene resin or mixtures thereof are pushed from the bottom to the top of the reaction system by a piston in a upright tube from which it is prevented from exiting through a gate that closes the upper vent of the tube. This polyethylene or polypropylene or mixtures thereof are then ignited against the grill, and the heat released by combustion is decomposed; thus, the wax production that overflows the device goes to a chute provided for this purpose on the periphery of the tube and, from there, the molten wax flows and is collected by known means.

The US Patent US 20210087113, "Modification of Asphalt Oxidation and Binders with Polymers", refers to formulations to improve asphalt formulations using waxes, among which polyethylene or polypropylene waxes could be used, or any mixtures thereof, originating from catalytic depolymerization or thermal degradation using a catalyst system, which may be a zeolite or alumina or any combination thereof. The catalyst system may also be an iron/copper complex or a zeolite or alumina support. The patent also mentions depolymerization or thermal degradation through initiation by free radicals or exposure to radiation.

The US Patent US 20220041905, "Green Polyethylene Wax for Hot Melt Adhesives, Coatings and Cosmetics", refers to the use of polyethylene waxes in different types of application, wherein the polyethylene wax comprises at least a portion of ethylene that is obtained from a renewable carbon source. The patent refers to *"bio-based PE'* as a PE in which the ethylene constituting the polymer is derived from renewable sources. The patent states that using materials derived from renewable sources is preferable to those obtained from fossil sources, aiming to reduce carbon dioxide emissions and mitigate the impact of polymer production on climate change. The patent sets out the concept of *"green PE wax"* as a polyethylene wax in which at least a portion of the ethylene constituting the PE wax is obtained from a renewable carbon source. In some applications, ethylene obtained from a renewable carbon source may be bio-based, such as that derived from a plant-based material. The patent further mentions that PE wax can be made by direct polymerization of ethylene under conditions to control the molecular weight and polymer branching, but it also mentions that, in specific applications, a high molecular weight PE resin can be broken down into low molecular weight fractions to produce PE wax. The patent also mentions that another method for obtaining PE waxes may include the separation of a low molecular weight fraction from a high molecular weight PE production stream.

The Brazilian Patent BR11201816499, "Method for Forming a Wax and Using Said Wax to Modify Asphalt", describes the use of a wax to improve asphalt formulations through the use of waxes.

The patent further describes that the process can be continuous or semi-continuous, and that the polymeric material can be high-density, low-density and linear low-density polyethylene resin. The polymeric material may also contain recycled plastic resins. The patent also teaches a refining step for the depolymerized polymeric material. The patent states that the pre-wax mixture may comprise solid polymeric material and an atactic polypropylene. The depolymerization process uses a catalysis system, preferably zeolite or alumina. The depolymerization process uses a second reactor, which may be a static mixer.

### PROBLEMS WITH THE STATE OF THE ART

Chinese Patent CN 105924552 refers to a process for producing polyethylene wax by thermal depolymerization. Unlike the patent process applied for herein, this patent teaches the use of an external rotating self-stirring centrifugal mass transfer reaction boiler and the need to use an Al-MCM-48 catalyst system, a mesoporous material, generally used as pyrolysis catalysts. The type of equipment used herein is much more complex than using an extruder system to perform the same task, thus generating higher capital costs for the same type of process. The use of catalyst systems, even in small quantities, tends to be an economic obstacle due to the high cost of these types of materials, as well as the need for a subsequent refining step to remove them from the wax. The patent mentions that the *"polyethylene that is not fully reacted"* is separated by a separator and continues to react in the reactor and that *"an amount of substances with a low boiling point that needs to be extracted"* is generated, as well as the production of a certain amount of *"smoke"* that needs to be treated for disposal. The process describes that a four-hour reaction is required, thus being a batch process. It also mentions that the final polyethylene wax obtained has a yellow color.

The Chinese Patent CN 108380168 describes in detail a system similar to an extruder for the continuous production of polyethylene wax via cracking, but it does not detail what type of wax is obtained, as well as the characteristics thereof, *i.e.,* it does not specify the type of material, being merely an equipment patent.

Chinese Patent CN 108772034 describes a polyethylene wax production process very similar to patent CN 105924552. By using a catalyst of the Al-MCM-48 type, the amount of use thereof, the process temperature, among others, are very similar factors. The use of catalyst systems, even in small quantities, is usually an economic obstacle due to the high cost of these types of materials, as well as the need for a subsequent refining step to remove them from the wax. What basically differentiates them is the type of equipment used to generate the polyethylene wax, and the type of equipment used herein is much more complex than using an extruder system to perform the same task, thus generating higher capital costs for the same type of process.

Chinese Patent CN110423296 describes a type of equipment much more complex than the use of an extruder system to perform the same task, thus generating higher capital costs for the same type of process. The use of solvent systems, in addition to dangerousness issues, is usually an economic obstacle due to the high cost of these types of materials, as well as the need for a subsequent refining step to remove them from the wax. A system with solvent at temperatures between 180°C and 230°C will generate a high pressure environment inside the reactor, which means that the type of reactor used is an expensive equipment when compared to an extruder designed for this type of operation. Once more, a closed system with high pressures between 5 and 10 Mpa is used, which will inevitably make the process in this equipment quite expensive when compared to an extruder designed for this type of operation.

The Chinese Patent CN 113698512 mentions the use of a Fisher Tropsch wax, i.e., in the polyethylene wax manufacturing process, a Fisher Tropsch wax is grafted for pre-treatment, thus creating a mixture of waxes between polyethylene wax and Fischer Tropsch wax and distorting the polyethylene wax produced. The patent also describes the use of argon gas as an inert gas. When argon gas is used as an inert gas in closed environments, it expels oxygen from the medium, which in the event of a leak can cause problems and cause accidents. These two items will make the process more complex and with a cost higher than the process described in this patent application.

Chinese Patent CN 115651268 describes the use of an inert gas, which may be nitrogen, helium or argon. The use of inert gas in closed environments expels oxygen from the medium, which in the event of a leak can cause problems and cause accidents. The patent mentions refining steps that may be: filtration, hydrotreatment, solvent refining, and adsorption refining. The use of solvents makes the process more dangerous, requiring much more control. All these required refining procedures will make the process more complex and with a cost higher than the process described in this patent application, besides the fact that it will generate a substantial amount of waste, which will be extracted in the refining steps. The use of catalyst systems, even in small quantities, tends to be an economic obstacle due to the high cost of these types of materials, as well as the need for a subsequent refining step to remove them from the wax.

Chinese Patent CN 209791501 basically refers to a patent describing the equipment to be used, but it does not describe or characterize the type of material that will be produced by it other than in a very generic way.

Chinese Patent CN 213493663 basically refers to a patent describing the equipment to be used, but it does not describe or characterize the type of material that will be produced by it other than in a very generic way.

Chinese Patent CN 213699840 describes a device used by the patent, comprising a tank body and a vessel body heated by a boiler. The patent basically describes the equipment to be used, but it does not describe or characterize the type of material that will be produced by it other than in a very generic way.

Chinese Patent CN 214514531U describes the use of an inert gas during the process. The use of inert gas in closed environments expels oxygen from the medium, which in the event of a leak can cause problems and cause accidents. The patent basically describes the equipment and process to be used, but it does not describe or characterize the type of material that will be produced by it other than in a very generic way.

Chinese Patent CN 216260656 describes a process that uses nitrogen as inert gas. The use of inert gas in closed environments expels oxygen from the medium, which in the event of a leak can cause problems and cause accidents. The process uses organic solvent. The use of solvents makes the process more dangerous, requiring much more control. The patent describes the use of a filter screen in the reactor. The patent basically describes the equipment and process to be used, but it does not describe or characterize the type of material that will be produced by it other than in a very generic way.

Chinese Patent CN 217288373U basically refers to a patent describing the equipment and process to be used, but it does not describe or characterize the type of material that will be produced by it other than in a very generic way.

Chinese Patent CN 218689294 describes the use of an inert gas during cracking to provide a gas-protected environment. The use of inert gas in closed environments expels oxygen from the medium, which in the event of a leak can cause problems and cause accidents. It mentions the use of an alumina powder as a cracking catalyst. The use of catalyst systems, even in small quantities, tends to be an economic obstacle due to the high cost of these types of materials, as well as the need for a subsequent refining step to remove them from the wax. The patent also describes a hydrorefining step. Hydrorefining steps tend to make the process more expensive as a whole. It also mentions that the polyethylene wax obtained, as described in this patent, is initially colored and has an odor, requiring subsequent refining steps to achieve better quality. The patent basically describes the equipment and process to be used, but it does not describe or characterize the type of material that will be produced by it other than in a very generic way.

French Patent FR 2613721 describes a very complex process for obtaining polyethylene waxes using very high temperature ranges, which will certainly be more expensive than the process described in this patent.

US Patent US 20210087113 describes formulations to improve asphalt formulations using waxes, among which polyethylene or polypropylene waxes could be used, or any mixtures thereof, originating from catalytic depolymerization or thermal degradation using a catalyst system, which may be a zeolite or alumina or any combination thereof. The catalyst system may also be an iron/copper complex or a zeolite or alumina support. The use of catalyst systems, even in small quantities, tends to be an economic obstacle due to the high cost of these types of materials, as well as the need for a subsequent refining step to remove them from the wax. The patent also mentions depolymerization or thermal degradation through initiation by free radicals or exposure to radiation, which is a process completely different from the production process that is the object of this patent application. In addition, exposure to radiation makes the process extremely dangerous, even if the necessary precautions are taken.

US Patent US 20220041905 describes a process for obtaining polyethylene wax through polymerization, which is different from the depolymerization process applied for in this patent application, which makes the production scale necessary to produce polyethylene waxes much larger and with high capital costs for implementation.

Brazilian Patent BR11201816499 describes a polyethylene wax manufacturing process wherein an extrusion equipment is used as a system to melt and feed a reactor in which the process will take place. Therefore, it does not use extruder equipment to produce polyethylene wax. It mentions the process as a chemical depolymerization and not as a physical and chemical process. The system also describes the use of a catalyst system, preferably zeolite or alumina. The use of catalyst systems, even in small quantities, tends to be an economic obstacle due to the high cost of these types of materials, as well as the need for a subsequent refining step to remove them from the wax. The patent also describes the use of a second reactor, which may be a static mixer. All these items certainly add more costs, not only in capital, but also in operational costs to the polyethylene wax production process.

### OBJECTS OF THE INVENTION

The object of this invention is a process for preparing polyethylene and polypropylene polyolefin waxes by thermal depolymerization of polyethylene and polypropylene thermoplastic resins, and particularly preparing polyethylene waxes within a certain range of viscosity and molecular weight that transform them into 100% biodegradable polyethylene waxes in a short period of time (less than 30 days).

The thermoplastic resins may originate from virgin petrochemical resins from naphtha or any other type of process that generates a raw material that can produce these polyethylene and polypropylene resins, off-grade petrochemical resins, industrial post-consumer waste (also known as shavings or other names commonly applied by the market to this waste) and urban post-consumer waste (also known as urban plastic waste); or any type of mixture thereof, in any proportion, which may vary between 1% and 99% proportion for each type of material, or any source of polyethylene and polypropylene resin that allows subsequent use thereof in this type of process, which is the object of this patent application.

The depolymerization process, which is the object of this patent application, also demonstrates that reacting polyethylene thermoplastic resins to prepare polyethylene waxes, as described in this patent, will provide a specific chemical transformation in the molecules of the polyethylene wax obtained, making them subject to subsequent oxidation through a very fast, cost-effective and high-yield process.

The oxidized polyethylene waxes thus obtained are of excellent quality and are also waxes with biodegradability characteristics in a short period of time, just like the original non-oxidized waxes.

Such oxidized waxes, having biodegradability characteristics in a short period of time, may subsequently be emulsified or dispersed in an aqueous medium, while maintaining the biodegradability characteristics in a short period of time, just like the original oxidized waxes, enabling the use thereof in liquid, semi-pasty or pasty form and expanding the range of possible uses in the different types of applications that require the employment and use thereof.

### BRIEF DESCRIPTION OF THE INVENTION

The present invention relates to a process for preparing polyethylene and polypropylene polyolefin waxes by thermal depolymerization of polyethylene and polypropylene thermoplastic resins, having viscosity ranges that allow them to be biodegradable in a short period of time and enabling subsequent oxidation thereof; after such oxidation, they can be emulsified or dispersed in an aqueous medium, while maintaining the biodegradability characteristics in a short period of time, just like the original oxidized waxes, enabling the use thereof in liquid, semi-pasty or pasty form and expanding the range of possible uses in the different types of applications that require the employment and use thereof.

### DESCRIPTION OF DRAWINGS

The present invention, which proposes a Process for preparing polyethylene and polypropylene polyolefin waxes by thermal depolymerization of polyethylene and polypropylene thermoplastic resins having characteristics of accelerated biodegradability, will be described in detail with reference to the figures listed below, in which:

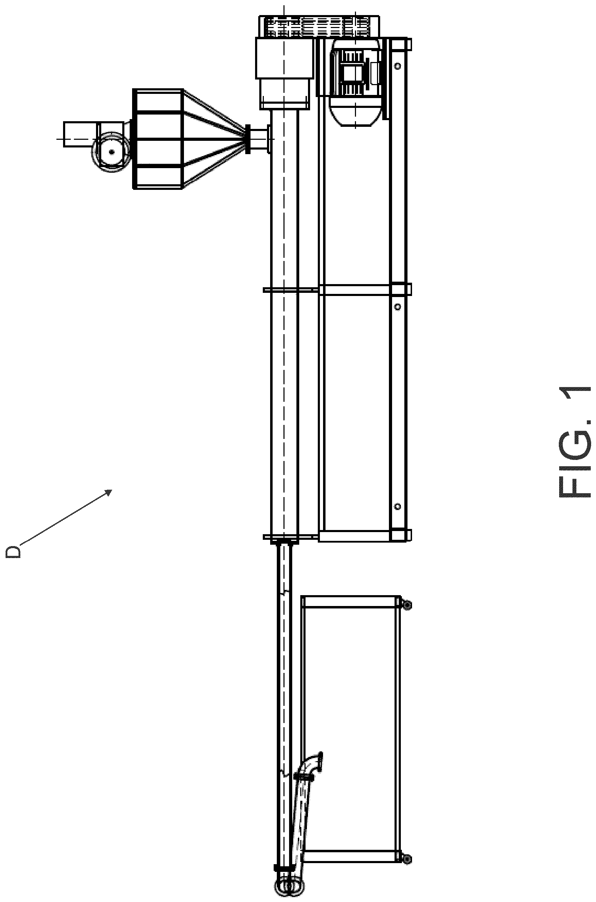

- Fig. 1 schematically illustrates an extruder system for depolymerization of polyethylene and polypropylene wax from polyethylene and polypropylene resin; side view: single-screw extruder with heating system, said equipment comprising a motor, reducer, feeder, barrel, pressure transducer, thermocouples, PLC and resistors already mentioned in other patents and within the already known state of the art.

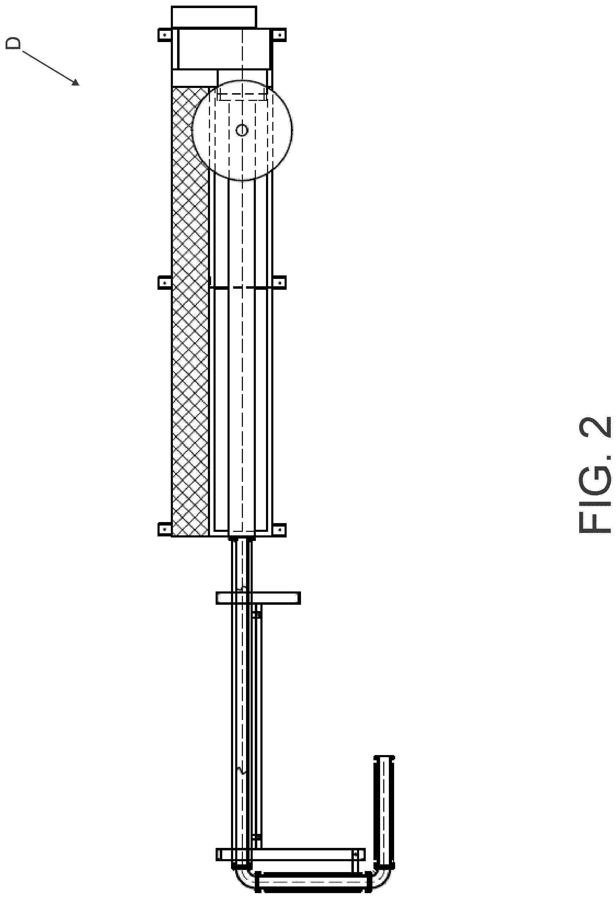

- Fig. 2 schematically illustrates an extruder system for depolymerization of polyethylene and polypropylene wax from polyethylene and polypropylene resin; top view: single-screw extruder with heating system, said equipment comprising a motor, reducer, feeder, barrel, pressure transducer, thermocouples, PLC and resistors already mentioned in other patents and within the already known state of the art.

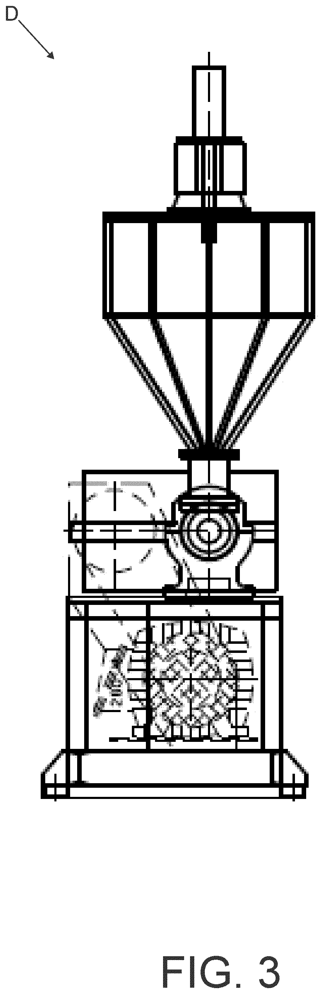

- Fig. 3 illustrates an extruder system for depolymerization of polyethylene and polypropylene wax from polyethylene and polypropylene resin; front view: single-screw extruder with heating system, said equipment comprising a motor, reducer, feeder, barrel, pressure transducer, thermocouples, PLC and resistors already mentioned in other patents and within the already known state of the art.

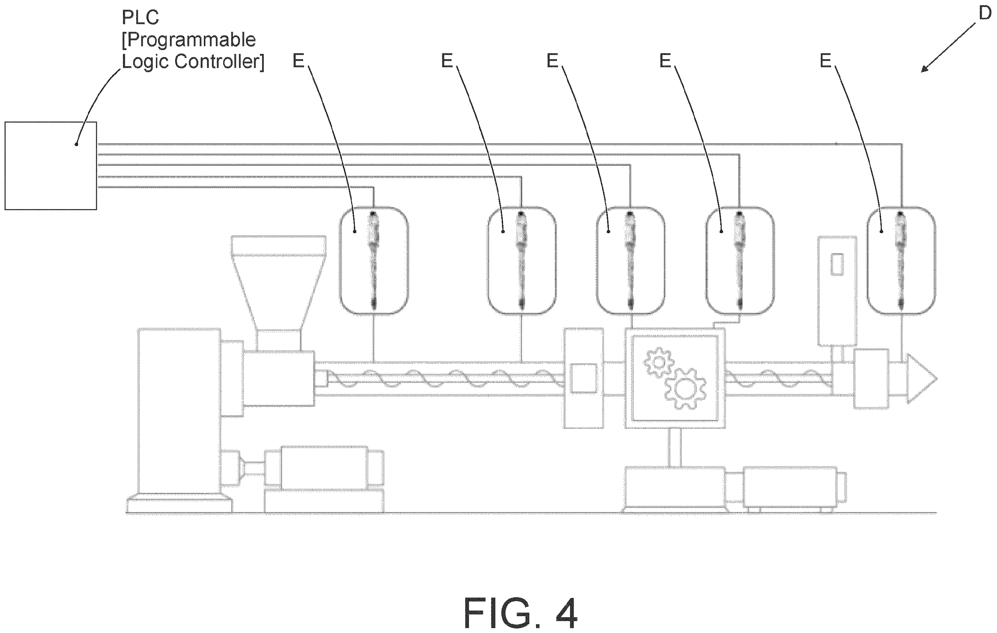

- Fig. 4 illustrates an extruder system for depolymerization of polyethylene and polypropylene wax from polyethylene and polypropylene resins; the side view demonstrating the production system comprising an extruder (D) plus a "MELT" pressure and temperature transducer (E) for process control. The "MELT" pressure transducer for high temperatures is an electronic device that transforms a physical variable (pressure) into an electrical signal (current or voltage or in "Can Open", "IO-LINK", "HART"), acquired by the several control, measuring and regulating apparatus.

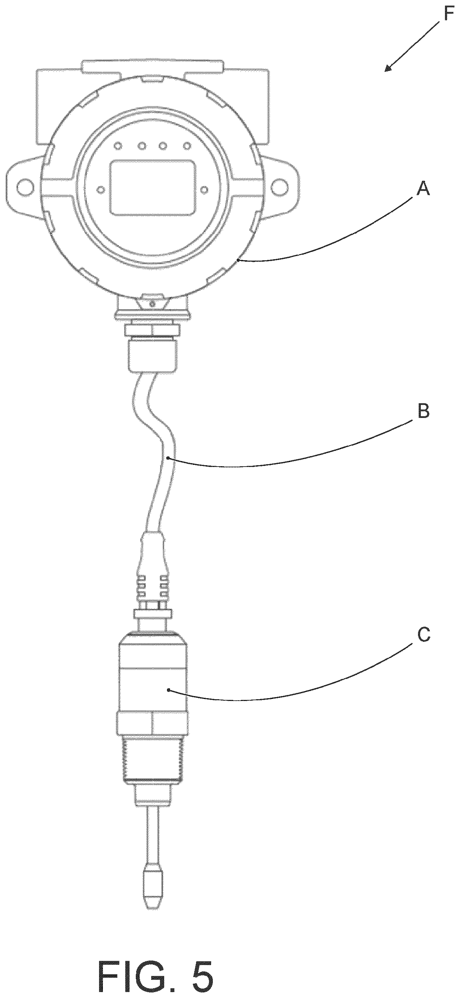

- Fig. 5 schematically illustrates a production system comprising an extruder containing a line viscometer for process control, said viscometer comprising a display and communicator system (A) to be connected to a PLC, a connection and data passing cable (B) and a temperature and viscosity sensor and meter system (C).

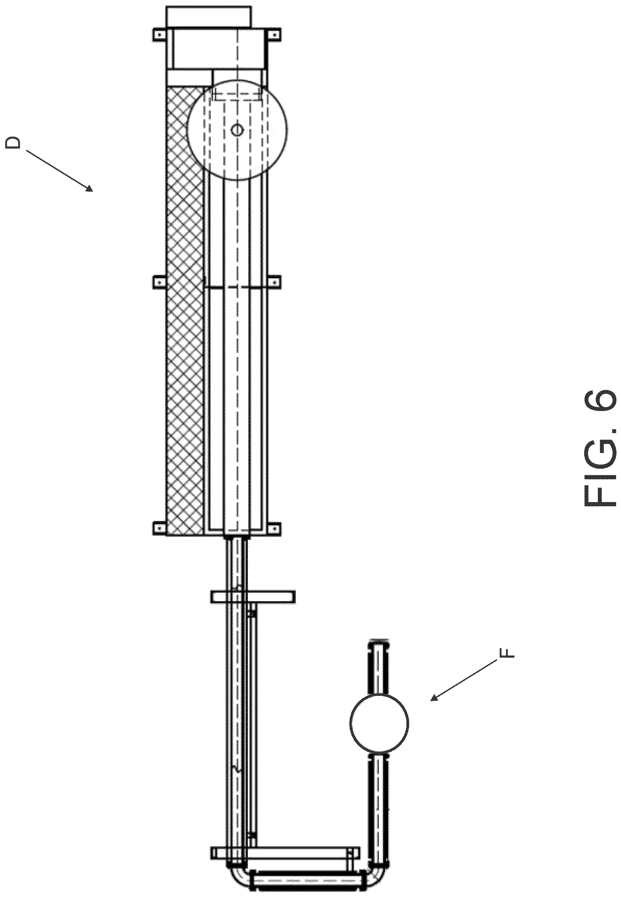

- Fig. 6 illustrates an extruder system (D) for depolymerization of polyethylene and polypropylene wax from polyethylene and polypropylene resins; the top view demonstrating the use of viscometer (F) as a regulator and process controller in the final portion of the piping exit, before discharging into a tank to homogenize the amount produced.

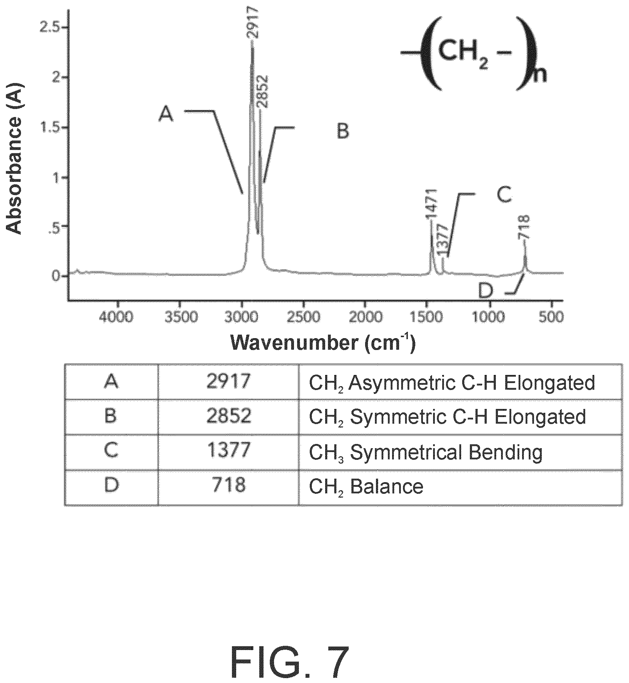

- Fig. 7 illustrates an infrared (IR) analysis for a low-density polyethylene (LDPE) resin, according to the literature found on the Internet (see web link 01), wherein it is verified that peaks A, B, C, D (2,917, 2,852, 1,471, 1,377, 718) cm⁻¹ are characteristic of a low-density polyethylene (LDPE) resin.

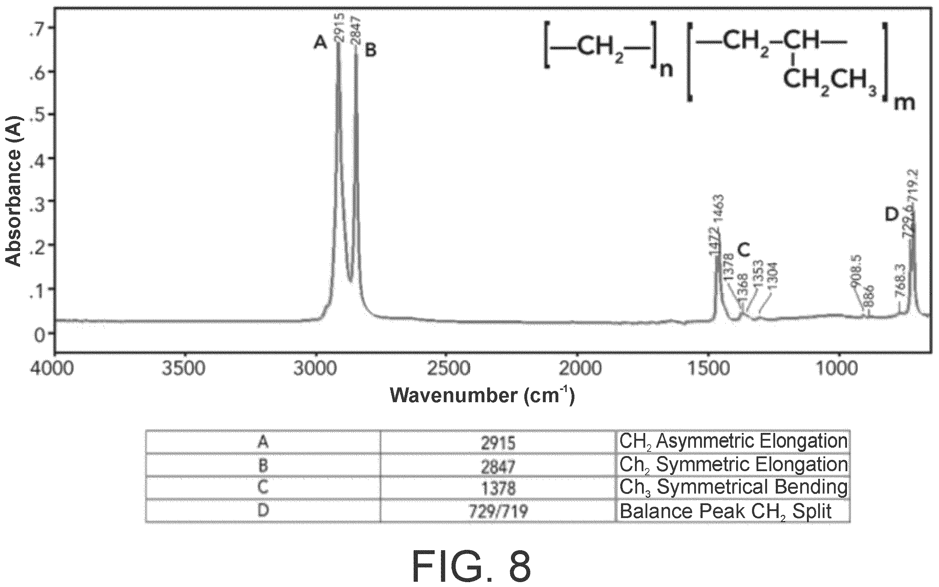

- Fig. 8 illustrates an infrared (IR) analysis for a linear low-density polyethylene (LLDPE) resin, according to the literature found on the Internet (see web link 02), wherein it is verified that peaks A, B, C, D (2,917, 2,847, 1,472, 1,378, 729, 719) cm₋₁ are characteristic of a linear low-density polyethylene (LLDPE) resin.

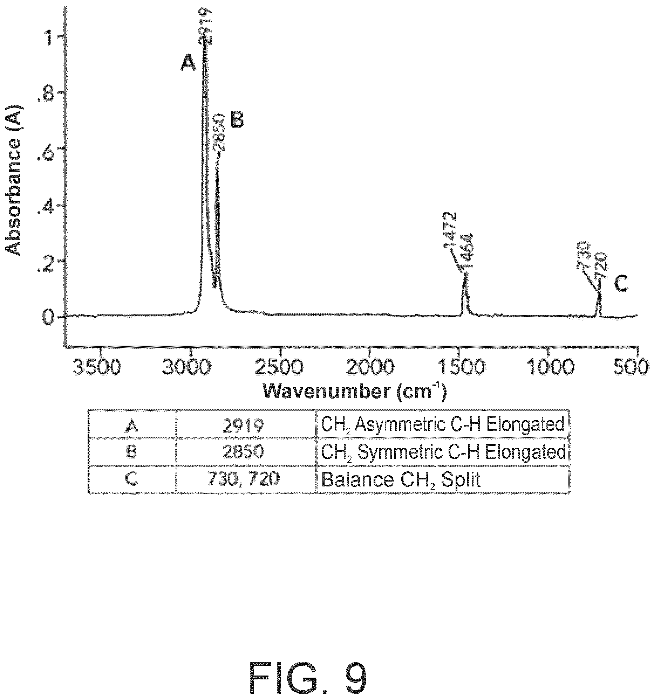

- Fig. 9 illustrates an infrared (IR) analysis for a high-density polyethylene (HDPE) resin, according to the literature found on the Internet (see web link 03), wherein it is verified that peaks A, B, C ( 2,919, 2,850, 1,472, 1,464, 730, 720) cm⁻¹ are characteristic of a high-density polyethylene (HDPE) resin.

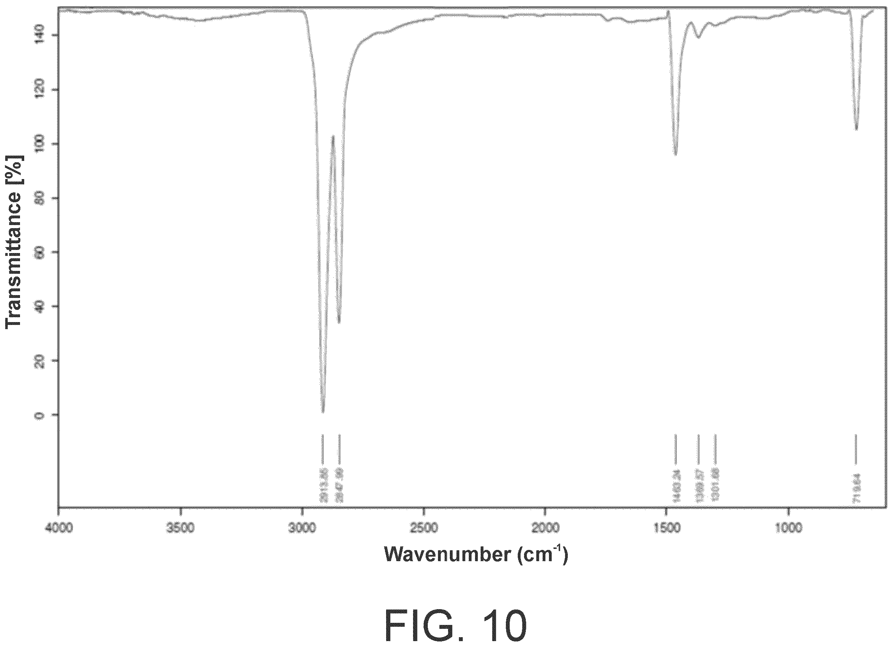

- Fig. 10 illustrates an infrared (IR) analysis for a low-density polyethylene (LDPE) resin, used to describe the state of the art of this patent application. This infrared (IR) features peaks (2,913, 2,847, 1,463, 1,369 and 719) similar to the peaks found in the available literature (Figure 07) (2,917, 2,852, 1,471, 1,377, 718) cm⁻¹ and which are characteristic of a low-density polyethylene (LDPE) resin. Therefore, the infrared (IR) study performed with low-density polyethylene (LDPE) resin is confirmed and will originate the other studies arising from this initial analysis and the object of this patent application.

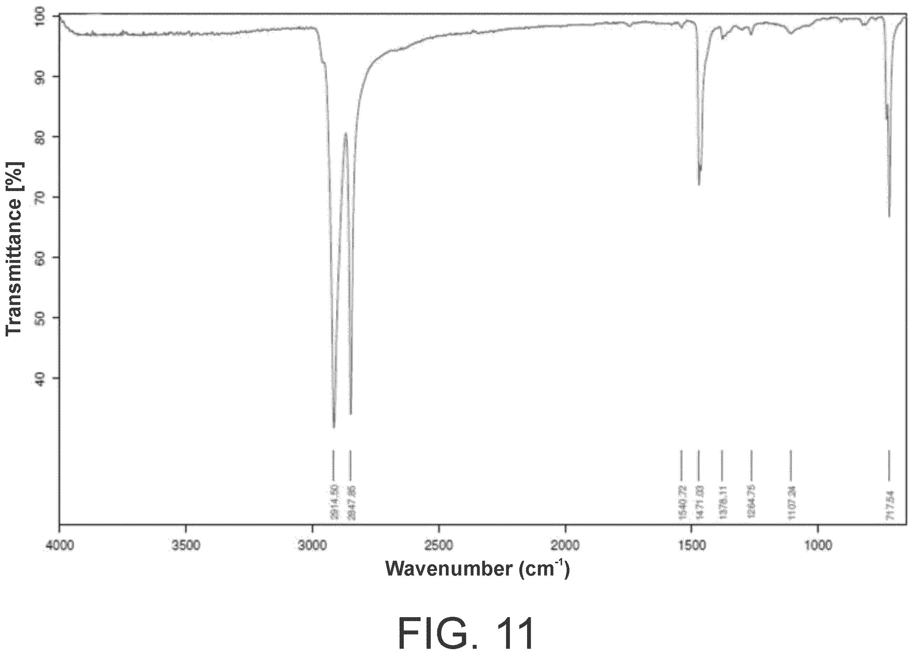

- Fig. 11 illustrates an infrared (IR) analysis for a linear low-density polyethylene (LLDPE) resin used to describe the state of the art of this patent application. This infrared (IR) features peaks (2,914, 2,847, 1,471, 1,378, 728 and 717) similar to the peaks found in the available literature (Figure 08) (2,917, 2,847, 1,472, 1,378, 729, 719) cm⁻¹ and which are characteristic of a linear low-density polyethylene (LLDPE) resin. Therefore, the infrared (IR) study performed with linear low-density polyethylene (LLDPE) resin is confirmed and will originate the other studies arising from this initial analysis and the object of this patent application.

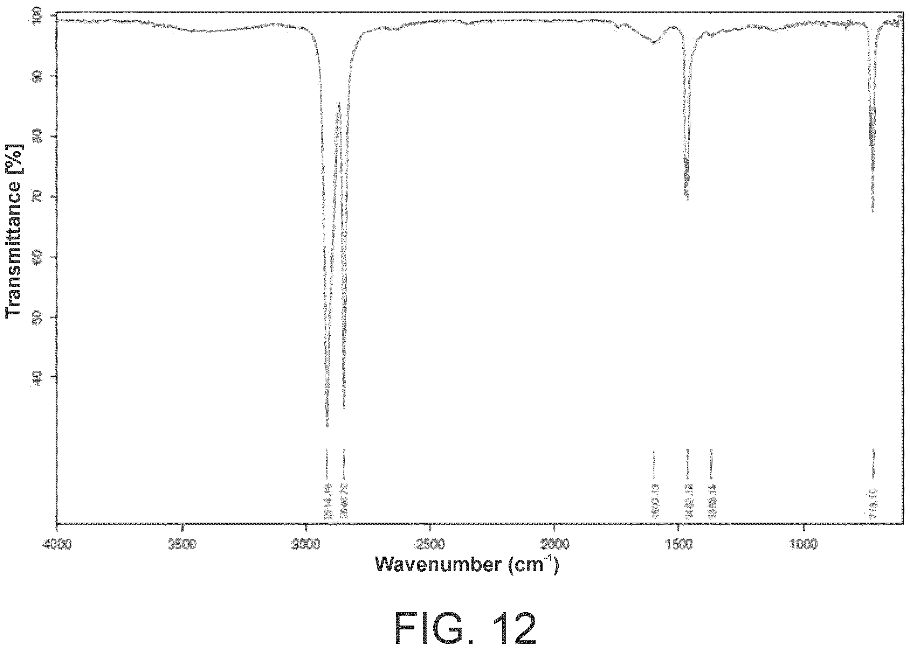

- Fig. 12 illustrates an infrared (IR) analysis for a high-density polyethylene (HDPE) resin used to describe the state of the art of this patent application. This infrared (IR) features peaks (2,914, 2,846, 1,462, 1,368, 727 and 718) similar to the peaks found in the available literature (Figure 09) (2,919, 2,850, 1,472, 1,464, 730, 720) cm⁻¹ and which are characteristic of a high-density polyethylene (HDPE) resin. Therefore, the infrared (IR) study performed with high-density polyethylene (HDPE) resin is confirmed and will originate the other studies arising from this initial analysis and the object of this patent application.

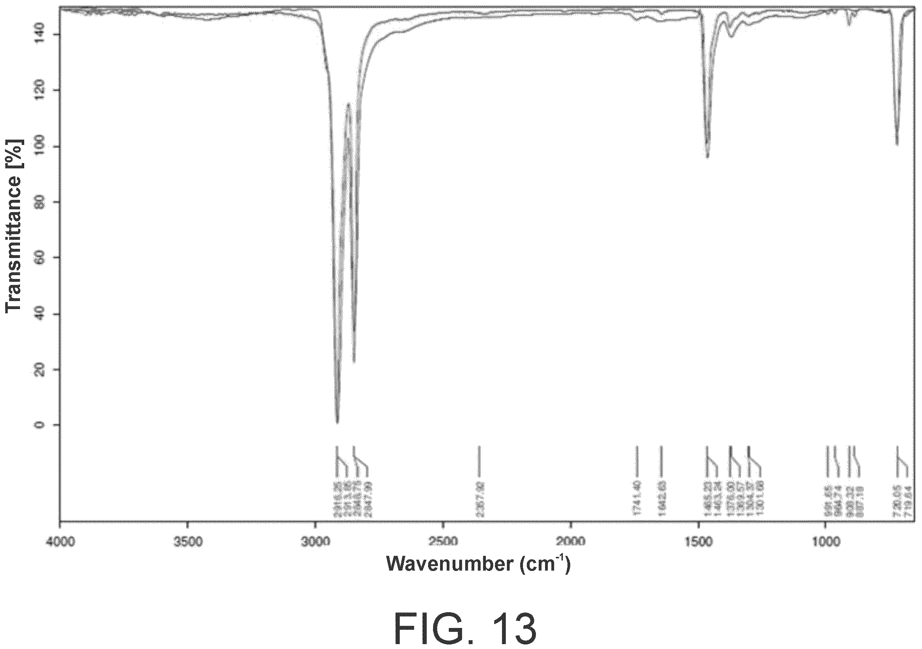

- Fig. 13 illustrates a total infrared (IR) of a low-density polyethylene (LDPE) resin versus a low-density polyethylene wax (LDPE wax) obtained through depolymerization using the process described in this patent.

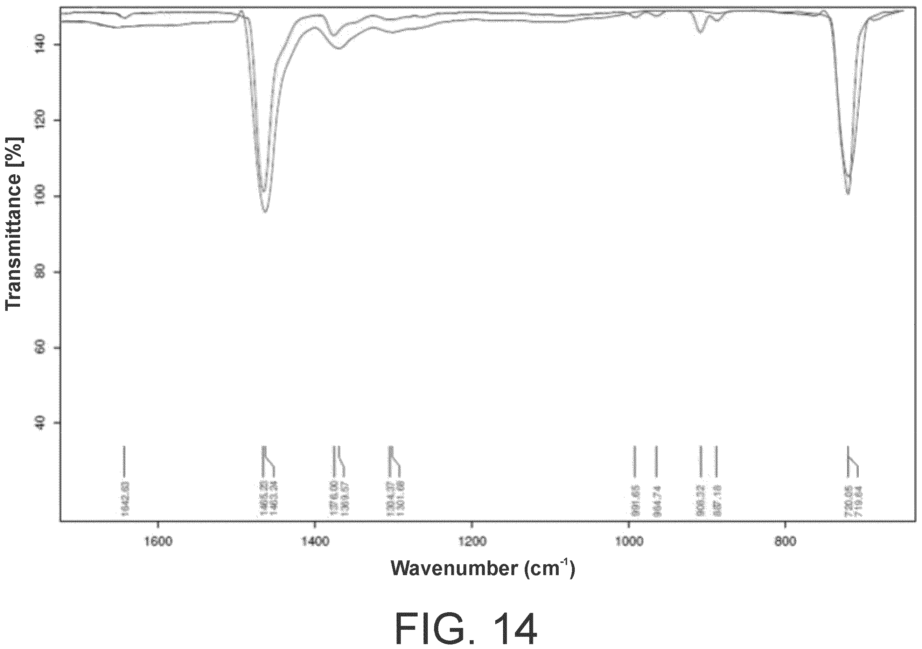

- Fig. 14 illustrates a partial infrared (IR), with bands between 700 cm⁻¹ and 1,700 cm⁻¹, of a low-density polyethylene (LDPE) resin versus a low-density polyethylene wax (LDPE wax) obtained through depolymerization using the process described in this patent.

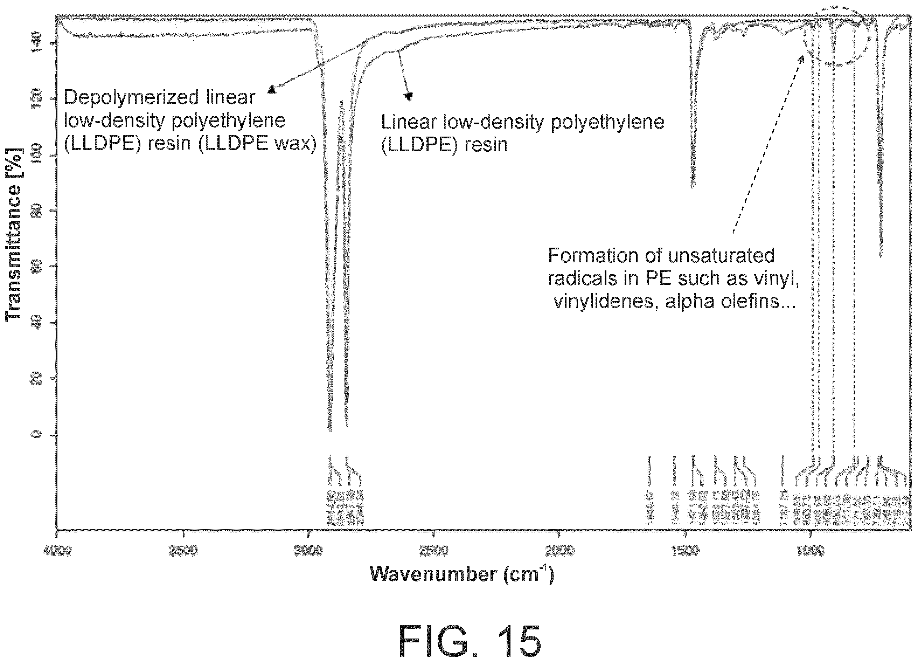

- Fig. 15 illustrates a total infrared (IR) of a linear low-density polyethylene (LLDPE) resin versus a linear low-density polyethylene wax (LLDPE wax) obtained through depolymerization using the process described in this patent.

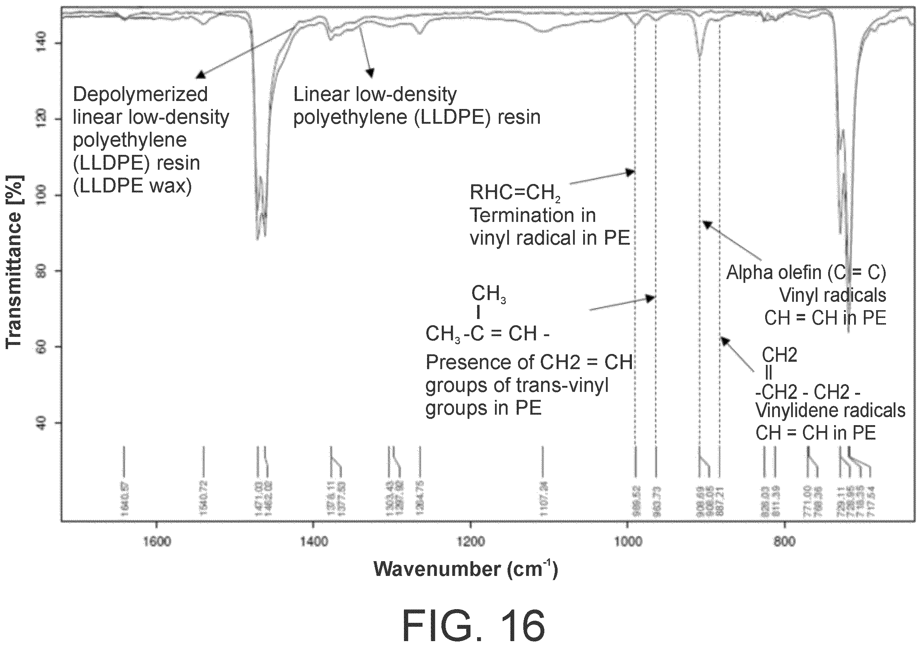

- Fig. 16 illustrates a partial infrared (IR), with bands between 700 cm⁻¹ and 1,700 cm⁻¹, of a linear low-density polyethylene (LLDPE) resin versus a linear low-density polyethylene wax (LLDPE wax) obtained through depolymerization using the process described in this patent.

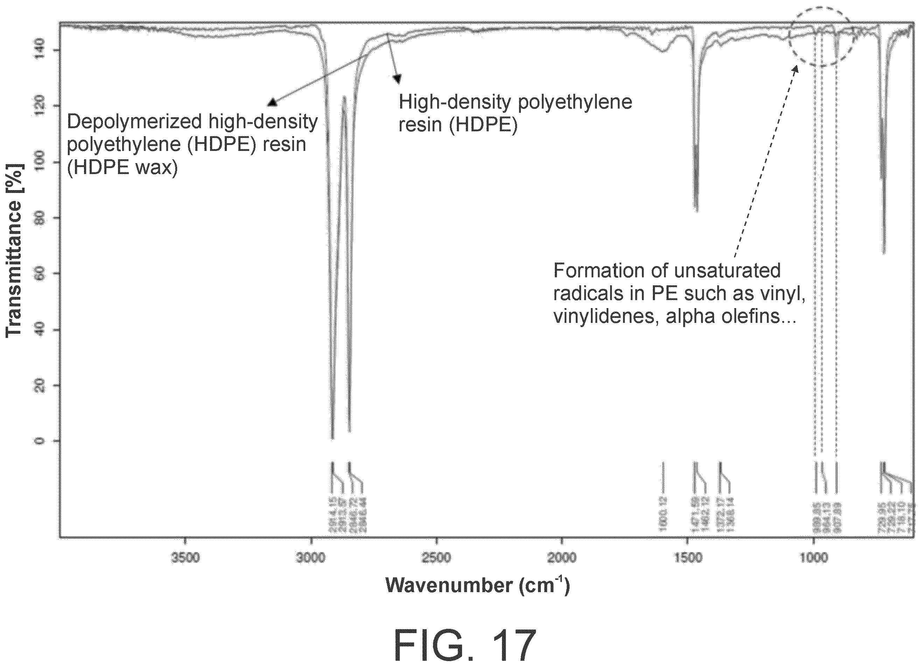

- Fig. 17 illustrates a total infrared (IR) of a high-density polyethylene (HDPE) resin versus a high-density polyethylene wax (HDPE wax) obtained through depolymerization using the process described in this patent.

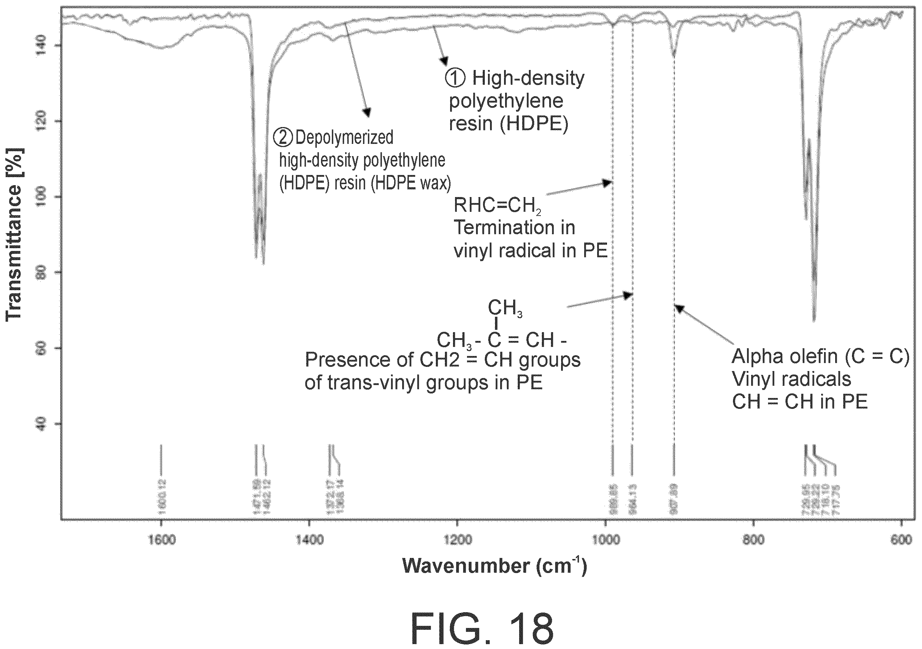

- Fig. 18 illustrates a partial infrared (IR), with bands between 700 cm⁻¹ and 1,700 cm⁻¹, of a high-density polyethylene (HDPE) resin versus a high-density polyethylene wax (HDPE wax) obtained through depolymerization using the process described in this patent.

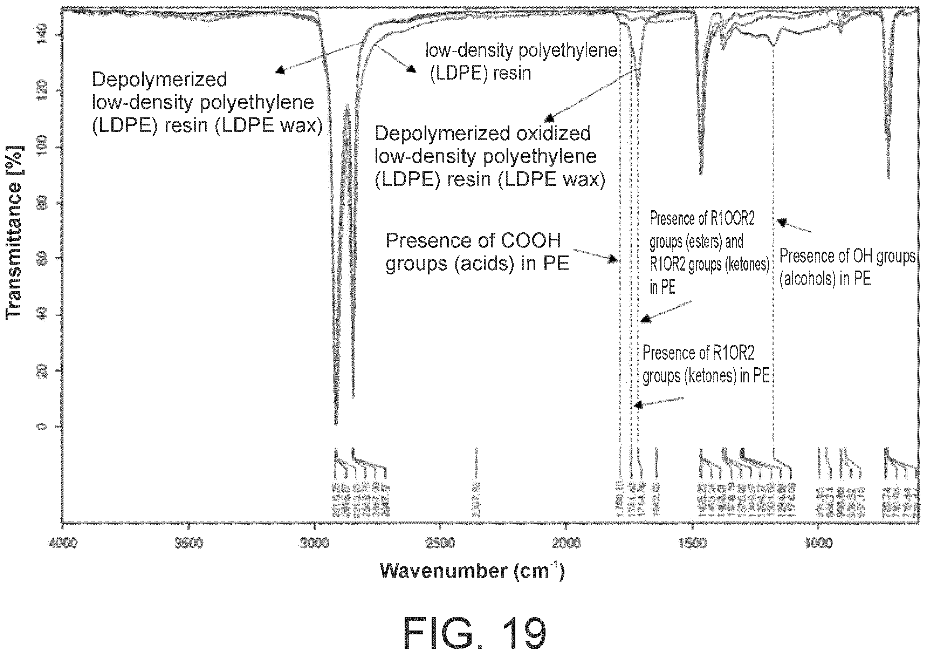

- Fig. 19 illustrates a total infrared (IR) of a low-density polyethylene (LDPE) resin versus a low-density polyethylene wax (LDPE wax) obtained through depolymerization versus an oxidized low-density polyethylene wax (LDPE wax) using the process described in this patent.

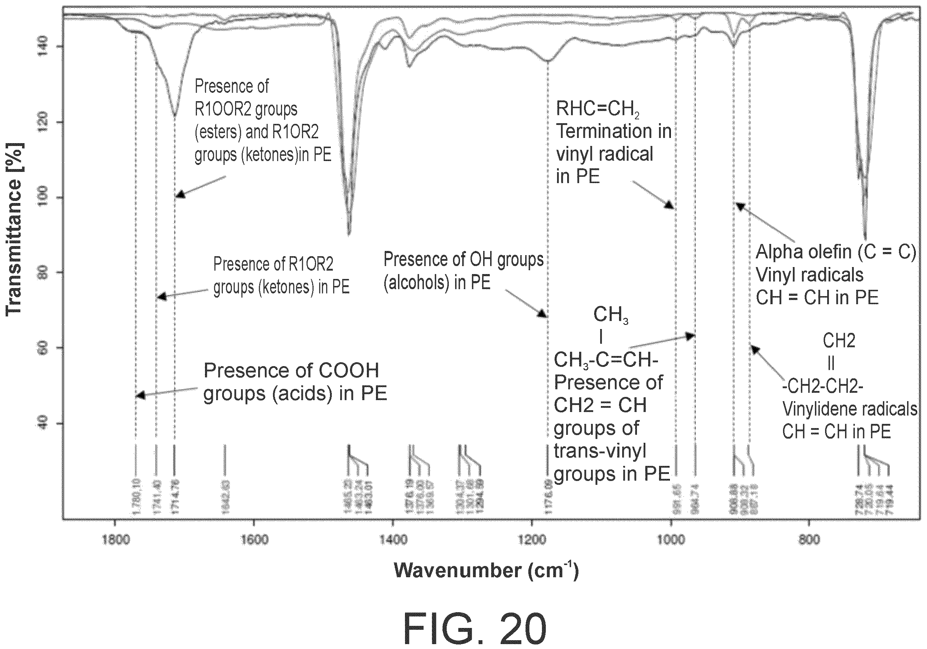

- Fig. 20 illustrates a partial infrared (IR), with bands between 700 cm⁻¹ and 1,700 cm⁻¹, of a low-density polyethylene (LDPE) resin versus a low-density polyethylene wax (LDPE wax) obtained through depolymerization versus an oxidized low-density polyethylene wax (LDPE wax) using the process described in this patent.

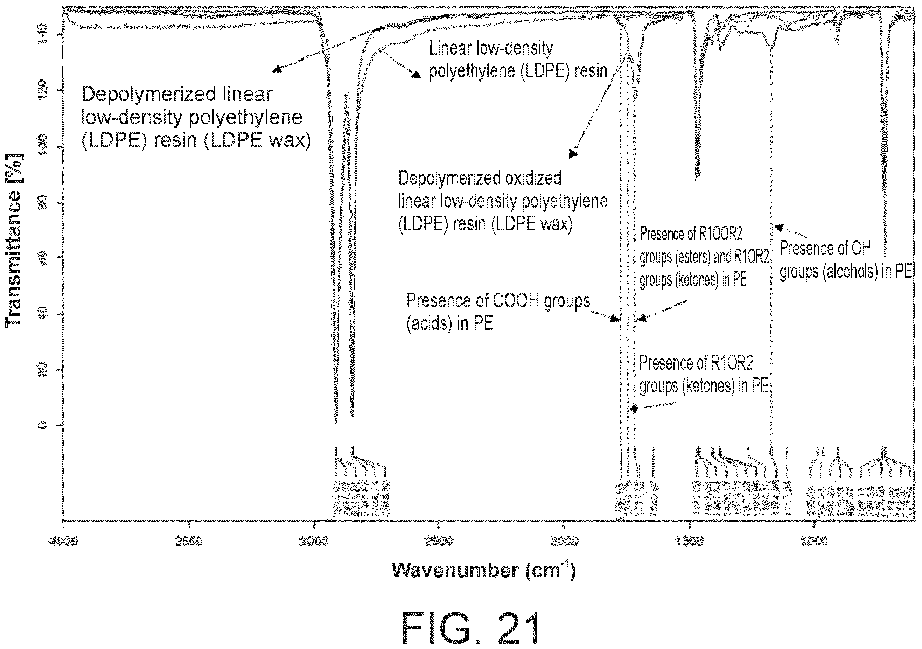

- Fig. 21 illustrates a total infrared (IR) of a linear low-density polyethylene (LLDPE) resin versus a linear low-density polyethylene wax (LLDPE wax) obtained through depolymerization versus an oxidized linear low-density polyethylene wax (LLDPE wax) using the process described in this patent.

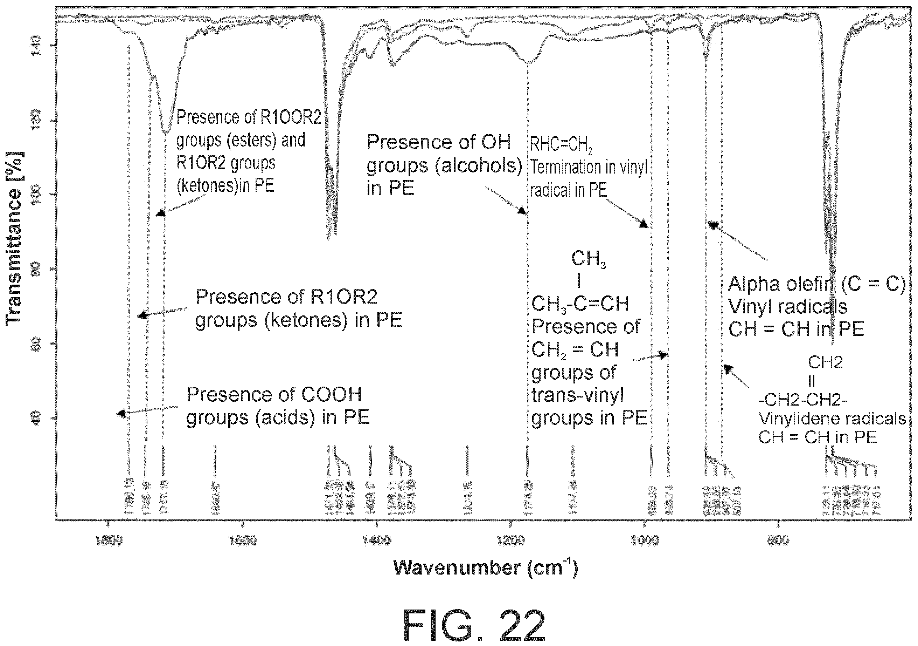

- Fig. 22 illustrates a partial infrared (IR), with bands between 700 cm⁻¹ and 1,700 cm⁻¹, of a linear low-density polyethylene (LLDPE) resin versus a linear low-density polyethylene wax (LLDPE wax) obtained through depolymerization versus an oxidized linear low-density polyethylene wax (LLDPE wax) using the process described in this patent.

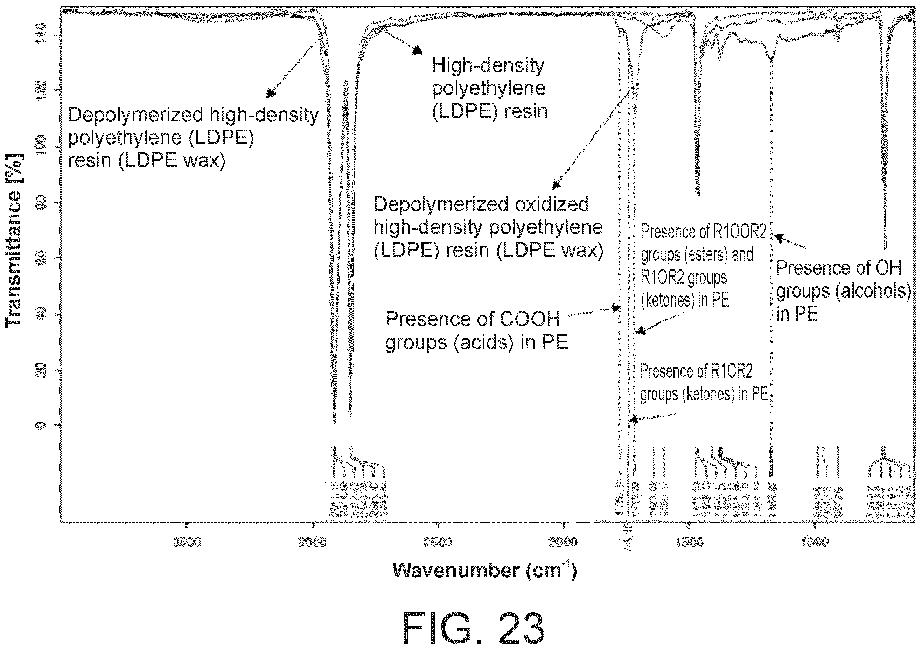

- Fig. 23 illustrates a total infrared (IR) of a high-density polyethylene (HDPE) resin versus a high-density polyethylene wax (HDPE wax) obtained through depolymerization versus an oxidized high-density polyethylene wax (HDPE wax) using the process described in this patent.

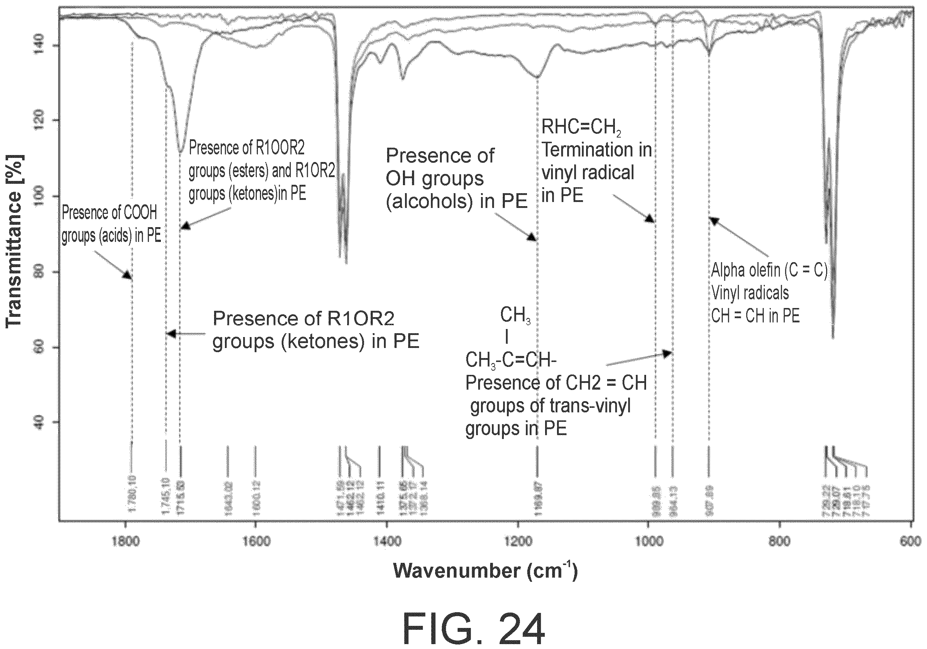

- Fig. 24 illustrates a partial infrared (IR), with bands between 700 cm⁻¹ and 1,700 cm⁻¹, of a high-density polyethylene (HDPE) resin versus a high-density polyethylene wax (HDPE wax) obtained through depolymerization versus an oxidized high-density polyethylene wax (HDPE wax) using the process described in this patent.

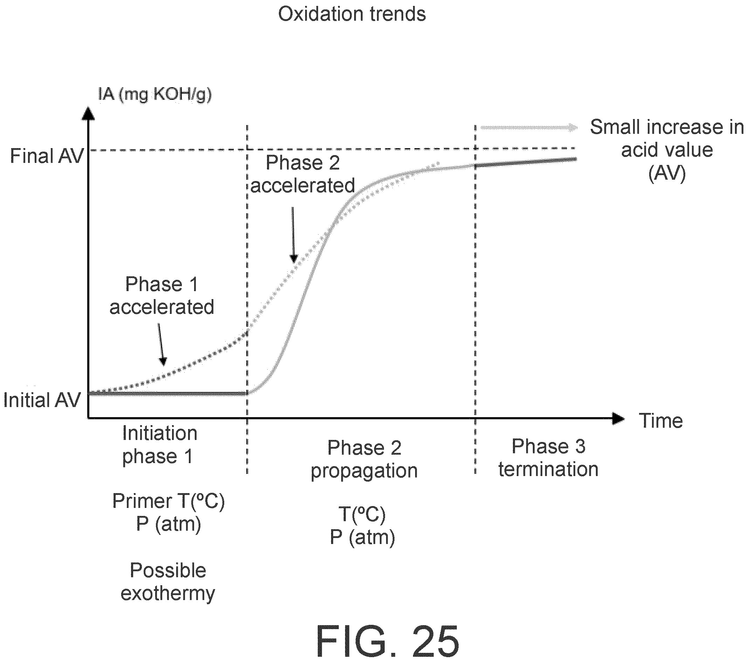

- Fig. 25 illustrates a generic scheme of a reactive oxidation system in a polyolefin wax, whether low-density polyethylene (LDPE), linear low-density polyethylene (LLDPE) or high-density polyethylene (HDPE). The evolution of an oxidation reaction is measured by the evolution of the acid value (AV) over time.

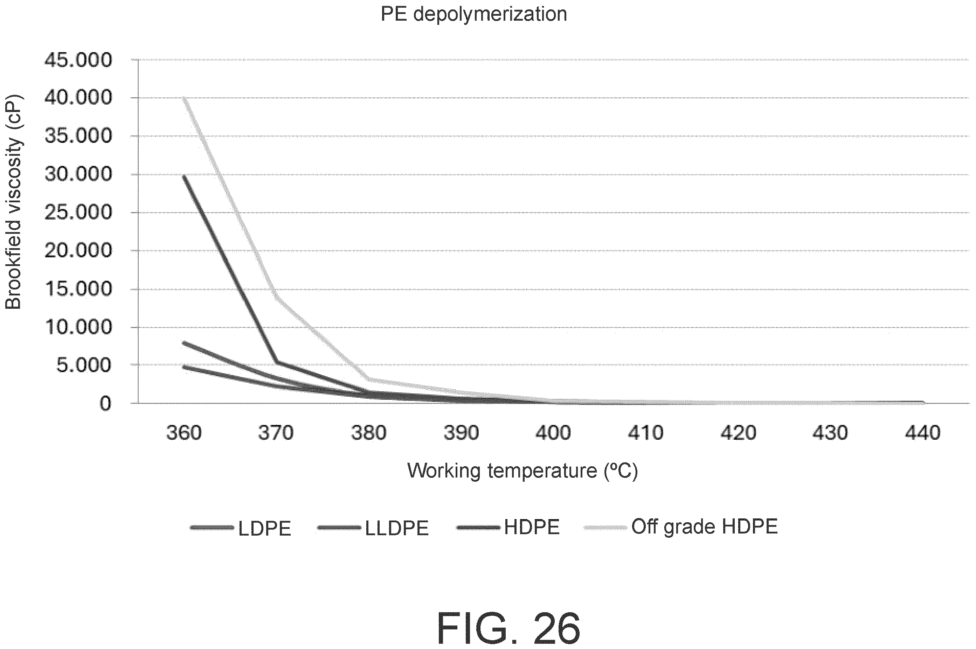

- Fig. 26 illustrates a set of viscosity curves as a function of temperature in a depolymerization of different types of polyethylene resins.

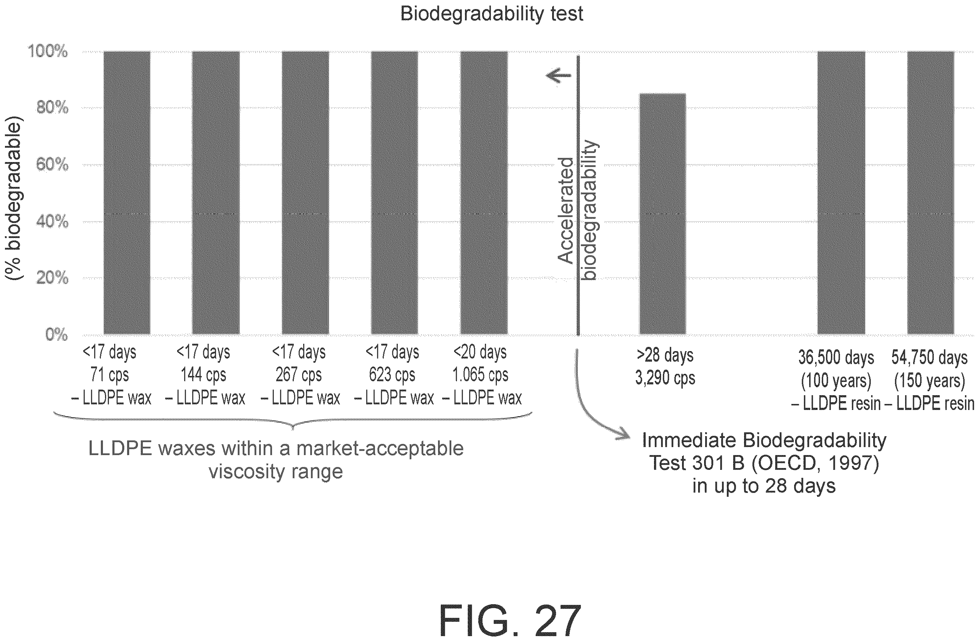

- Fig. 27 illustrates the biodegradability of a low-density polyethylene (LDPE) wax having a market-acceptable viscosity range, as per the OECD 301B methodology.

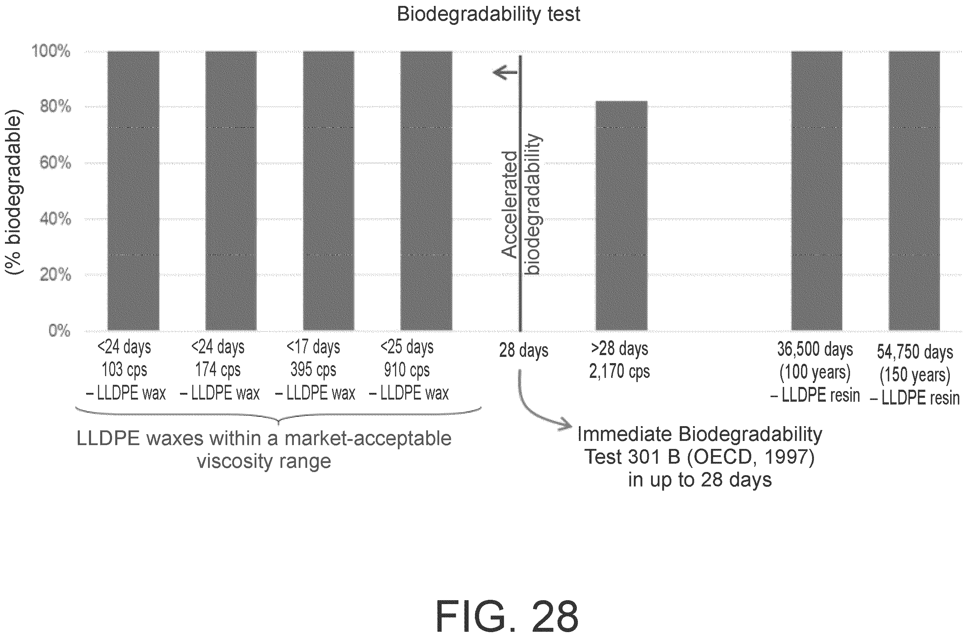

- Fig. 28 illustrates the biodegradability of a linear low-density polyethylene (LLDPE) wax having a market-acceptable viscosity range, as per the OECD 301B methodology.

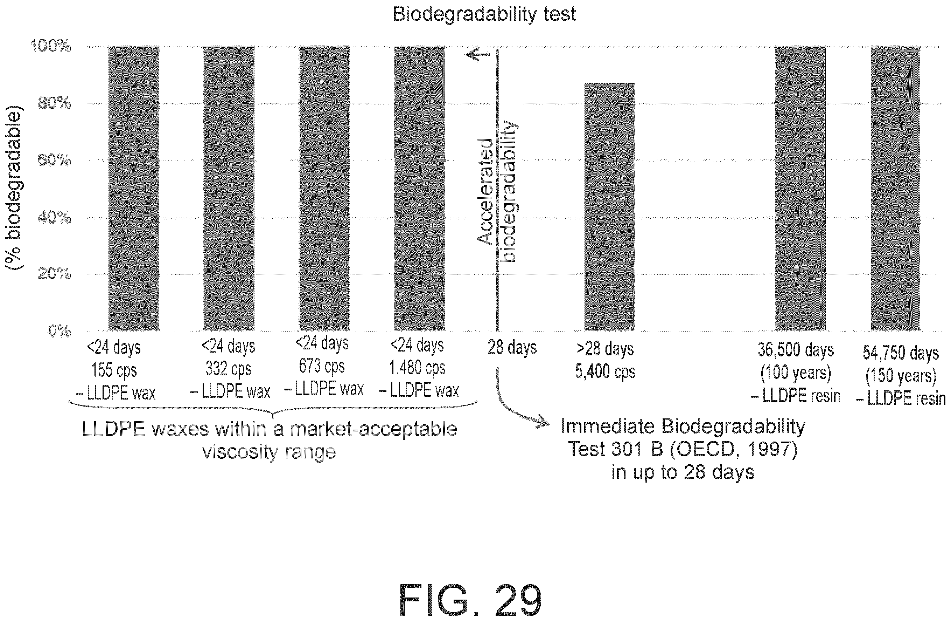

- Fig. 29 illustrates the biodegradability of a high-density polyethylene (HDPE) wax having a market-acceptable viscosity range, as per the OECD 301B methodology.

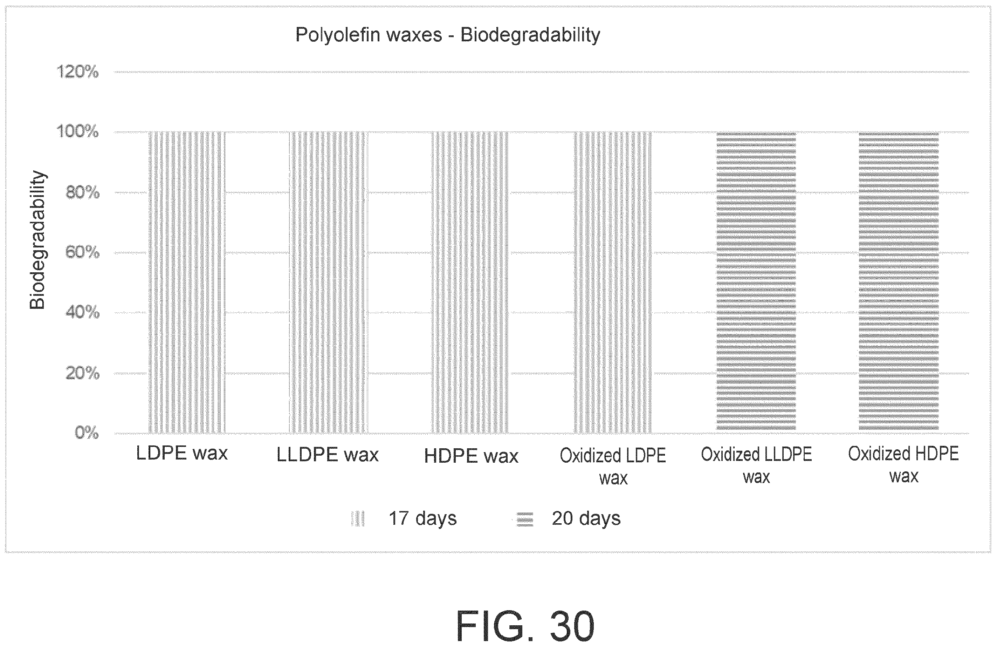

- Fig. 30 illustrates examples of immediate biodegradability of polyethylene waxes within a market-acceptable viscosity range. The chart in Fig. 30 shows a biodegradability demonstration obtained by the polyolefin waxes, which are the object of this patent application, using the OECD (Organization for Economic Cooperation and Development) guidelines - Guide for Testing Chemical Products - CO₂ Evolution Test - Ready Biodegradability - 1992. The methodology used complied with OECD 301B - Immediate Biodegradability.

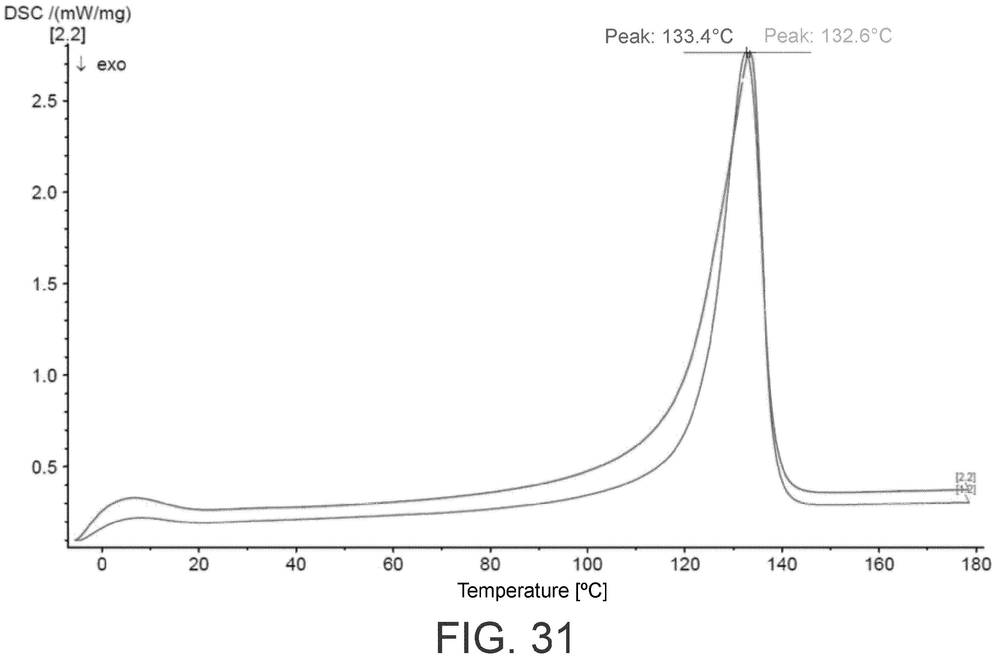

- Fig. 31 illustrates a DSC (Differential Scanning Calorimetry) chart, which is a method wherein the material to be analyzed is subjected to an analysis of differential scanning calorimetry, which is a technique in which the difference in electrical power or heat flux between a sample and a reference material is measured as a function of temperature using a differential calorimeter, which makes an accurate measurement of the transition heat between these materials; such analysis was made for two types of high-density polyethylene (HDPE), one of which is a virgin resin sold on the market and the other is an off-grade resin.

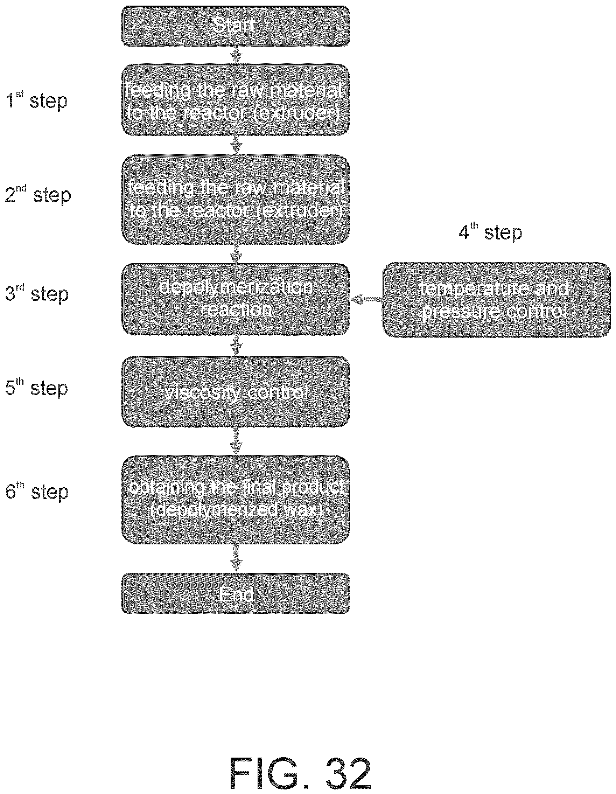

- Fig. 32 illustrates a flowchart of the process referred to herein, said flowchart representing all steps of the depolymerization process, from the first to the last step that culminates in obtaining the final product, which are the depolymerized polyethylene and polypropylene polyolefin waxes.

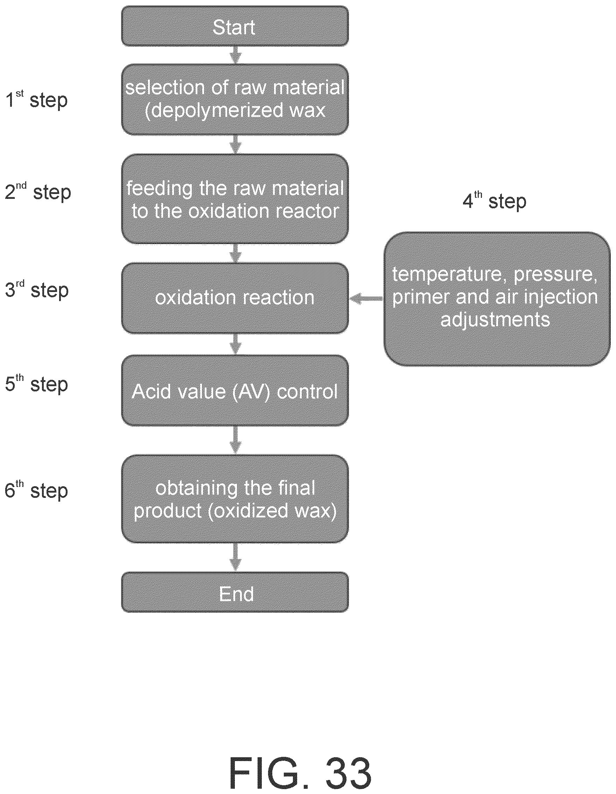

- Fig. 33 illustrates a flowchart of the process referred to herein, said flowchart representing all steps of the depolymerization process, from the first to the last step that culminates in obtaining the final product, which are the depolymerized oxidized polyethylene and polypropylene polyolefin waxes.

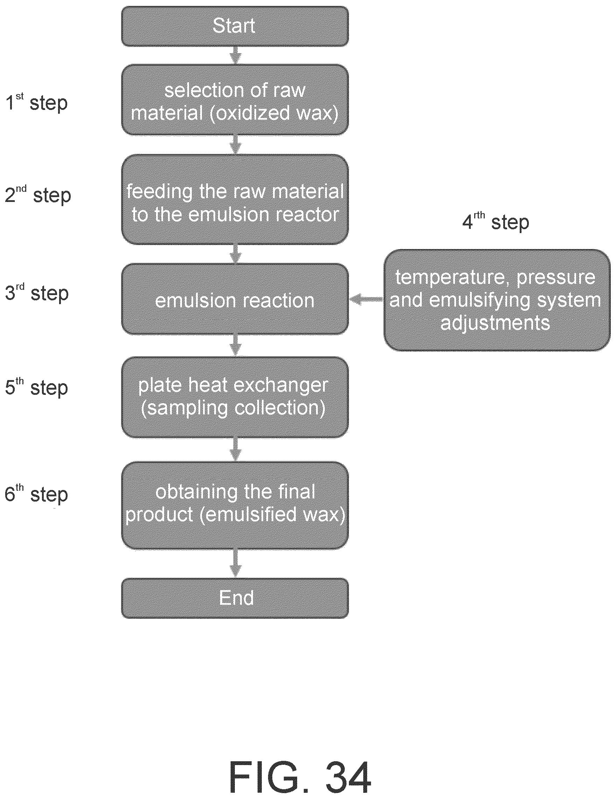

- Fig. 34 illustrates a flowchart of the process referred to herein, said flowchart representing all steps of a process complementary to the depolymerization process, from the first to the last step that begins with an oxidized wax and culminates in obtaining the final product, which are the depolymerized emulsified polyethylene and polypropylene polyolefin waxes; and

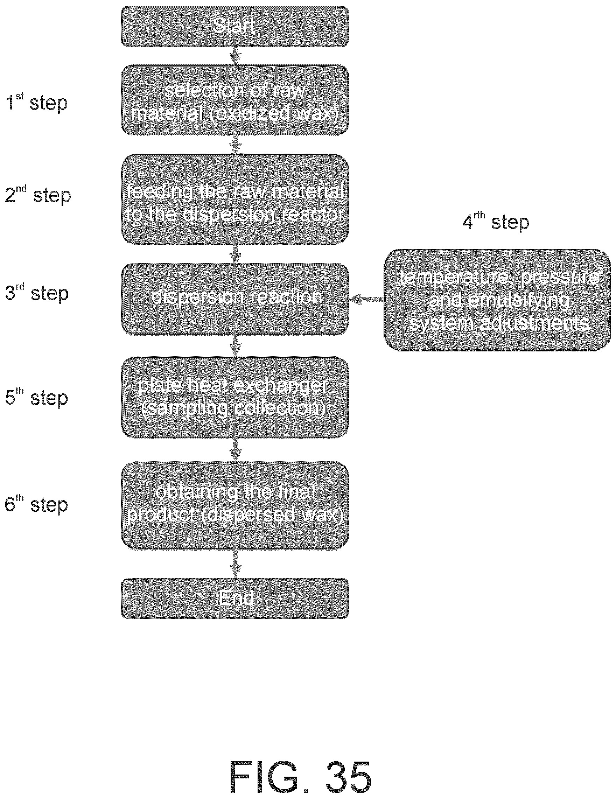

- Fig. 35 illustrates a flowchart of the process referred to herein, said flowchart representing all steps of a process complementary to the depolymerization process, from the first to the last step that begins with an oxidized wax and culminates in obtaining the final product, which are the depolymerized dispersed polyethylene and polypropylene polyolefin waxes.

### REFERENCE SIGNS

The Process for preparing polyethylene and polypropylene polyolefin waxes by thermal depolymerization of polyethylene and polypropylene thermoplastic resins having characteristics of accelerated biodegradability, which is the object of the present invention, will be better described by means of the following reference signs:
(A) - Display and communicator to be connected to the PLC (Figure 05).
(B) - Connection and data passing cable (Figure 05).
(C) - Temperature and viscosity sensor and meter (Figure 05).
(D) - Reactor (Extruder) (Figure 04), (Figure 06).
(E) - "MELT" pressure and temperature transducer (Figure 04); and
(F) - Industrial viscometer (Figure 06).

### DETAILED DESCRIPTION OF THE INVENTION

### ADVANTAGES OF THIS PATENT APPLICATION OVER THE PRIOR ART CITED

The polyethylene or polypropylene thermoplastic resins depolymerization or cracking process, which is the object of this patent application, provides a number of advantages over the existing state of the art.

The advantages begin in the process itself when compared to the polymerization of polyethylene or polypropylene waxes or the use of a by-product formed during the polymerization of high-density polyethylene (HDPE) resin through the slurry process, known and patented as Mitsui process and Hostalen process; such as in depolymerization processes described in other patent applications cited in the topic

### "STATE OF THE ART":

- final products with quality characteristics very similar to materials produced by polymerization (high quality).
- modular production cells (tons/year) with much less volume when compared to the traditional polymerization process.
- initial costs of capital invested for production are much lower.
- process technology that is less dependent on licensing, as in some cases it does not depend on the use of catalysts to achieve the final product.
- better flexibility for producing different types of materials, as the production scale is smaller and more flexible than a polymerization plant; and
- greater flexibility in implementing production centers in different geographic regions due to the above regarding production scale and initial cost of capital invested.

The production process, despite being modular, which can be a batch or continuous process, can and shall be controlled at several points in the production process through the use of "MELT" probes, which are essential in the extrusion process as they contribute for installation safety due to the use thereof in preventing uncontrolled increase in machine pressure, consequently contributing to increased production performance thanks to the ability to maintain a stable and optimal flow rate.

"MELT" sensors are pressure/ temperature transducers and transmitters designed for use in environments that reach very high temperatures, capable of measuring pressure in average temperature conditions of up to 538°C based on two main construction technologies (with filling fluid using strain gauge technology or completely without fluid using silicon piezoresistive technology).

Still regarding the production process, it has the following characteristics:
- the production process, despite being modular, which can be a batch or continuous process, can and shall be controlled at the exit of the production process, through a viscometer, which will be crucial for defining the viscosity range and molecular weight of the materials that will be produced.
- it does not use specific catalyst systems that are usually quite expensive and generally require subsequent disposal, whether MCM-41, MCM-48, SAPO molecular sieve, ZSM molecular sieve, CaCO₃ or aluminosilicate system or any other type of catalyst.
- as it is a well-controlled and defined process, it does not require the addition of inert gases of any nature, for whatever purpose.
- it does not require subsequent hydrorefining steps to improve wax quality.
- it does not use any type of solvent during the depolymerization process; and
- it does not require the addition of any type of wax during the process to improve the performance thereof.

In summary, the need for investment is lower, the amount produced can be modular and the quality of the materials produced remains at a high level.

As for the products obtained through this technology, which is the object of this patent application, it is shown that this type of production route is capable of producing waxes with the main characteristics necessary to supply the market, which are:
- molecular weight (Mw).
- viscosity at a given temperature, generally 140°C.
- melting point (°C).
- dropping point (°C).
- softening point (°C).
- density (g/cm³).
- hardness (dmm).
- crystallinity (%).
- among others; very similar to polyethylene waxes obtained through the polymerization process.

Furthermore, the characteristics that will be imparted to polyolefin waxes, whether made of polyethylene or polypropylene and obtained by the processes described in this patent, are very important and differ from those previously presented in the state of the art, as such characteristics will feature, as a consequence, intrinsic aspects of the waxes that take them to a level of quality and applicability higher than the materials previously presented to the market for the same types of application, manufactured using methods already described in other patents mentioned herein.

Once the polyethylene wax is obtained through the process that is the object of this patent application, during depolymerization, in the molecules of the polyethylene waxes in formation, an important reactive chemical center will be created for subsequent oxidation thereof and transformation into an oxidized polyethylene wax of excellent quality, similar to oxidized waxes produced in traditional oxidation processes made with polyethylene waxes produced by traditional polymerization processes.

The creation of such reactive chemical centers can be shown through a comparative infrared (IR) analysis between the raw material used, whether a low-density polyethylene (LDPE) resin (Figures 13 and 14) or a linear low-density polyethylene (LLDPE) resin (Figures 15 and 16) or a high-density polyethylene (HDPE) resin (Figures 17 and 18) of any origin and the depolymerized waxes obtained.

Due to the characteristics generated by the depolymerization process described in this patent, the production of oxidized polyethylene waxes will occur with:
- a much lower cost.
- a much greater productivity.
- a greater increase in the useful life of the equipment used for the oxidation process.
- a higher level of quality; and
- very similar to the high quality materials currently found on the market and manufactured using the existing and known processes of the state of the art.

### ADVANTAGES OF THIS TECHNOLOGY, WHICH CHARACTERIZE THIS PATENT APPLICATION, FROM THE ASPECT OF A GREEN TECHNOLOGY

Plastics in general, but especially post-consumer plastics, emerge as the by-product of final products, such as plastic bags, which have ended their cycle as consumer items and are now lowered to solid waste. The approach to this reality adopts the acronym PCR, derived from the expression "Post-Consumer Recycled" content, which alludes to the resins generated through the recycling of plastic raw materials already used by consumers.

In the current state of the art, around 85% of plastic packaging worldwide ends up in waste dumps. In the United States, one of the largest global generators of PCR plastics, only 5% of the 50 million tons of plastic waste discarded by households went through a recycling process, as pointed out by some environmental NGOs.

Given the projection of a potential triple increase in production by 2060, plastics, largely derived from oil and gas, stand out as a considerable source of carbon pollution, thus intensifying climate change. The significant volume of plastic waste dumped in landfills and in the oceans has a detrimental impact on marine life and the environmental balance as a whole. The controversial plastic bags made of polyethylene can take up to 150 years to disintegrate.

Nonetheless, when plastic bags are buried, their durability is even greater, as microorganisms do not have mechanisms to degrade them, and this period can be extended from 100 to 400 years. The challenge is compounded by the non-biodegradability of most plastic polymers, i.e., they do not decompose easily. PE recycling is considered one of the most complex among the several plastic materials and represents a circular and sustainable transformation route.

However, in the current circumstances, especially regarding polyethylene and polypropylene, such implementation is still at an early step, with significant challenges in mitigating the growing plastic crisis. Additionally, a point of relevance is that post-consumer plastic (PCR) resin, originated from the recycling of materials, faces obstacles when compared to virgin plastic in terms of cost. This situation occurs when the value of virgin plastic is equal or even lower, which restricts the possibilities for recycled materials. This scenario sets out direct competition in the plastics transformation market between virgin resin and recycled material.

In the pioneering technology developed by and the object of this patent application, recycled polyethylene (PE) and polypropylene (PP) plastics follow a divergent path than the return to the original plastic transformation market. By going in the opposite direction to the traditional plastic transformation chain, they are transformed into a new and innovative material, a synthetic wax, and join an entirely new production chain. Through this innovative technological approach, the new materials, i.e., the synthetic waxes, gain the remarkable ability to be rapidly biodegradable in the environment. This regenerative cycle culminates in a complete renewal, thus ensuring total compatibility with the environment.

The process described in this patent aims to generate polyethylene or polypropylene polyolefin waxes having biodegradable characteristics in a short period of time. This biodegradability can be measured by immediate biodegradability tests in accordance with the OECD (Organization for Economic Cooperation and Development) guidelines - Guide for Testing Chemical Products - CO₂ Evolution Test - Ready Biodegradability - 1992. The methodology used complied with OECD 301B - Immediate Biodegradability. This OECD 301B methodology can be applied to most materials, with the exception of volatile products. The OECD methods are the most popular and accepted methods in many countries.

This is a methodology adopted by the OECD on 07/17/1992 to evaluate biodegradability in a short period of time. The OECD 301B methodology refers to the evolution of CO₂ ("Modified Sturm Test"). The 301 methodology is similar to ISO Standard 7827-1984 and is used to replace the AFNOR methodology.

The OECD 301B methodology is widely used by municipal water treatment companies to regulate non-biodegradable waste entering the treatment system and that may consequently reach the population that consumes this treated water.

The waxes produced with the process that is the object of this patent application were tested in accordance with OECD 301B methodology and, through Fig. 30, it can be verified that all waxes are biodegradable in a period of time of less than 30 days, *i.e.,* one month. Such waxes were all produced from thermoplastic resins that would remain in nature for many years, damaging the environment, as follows:
- LDPE wax: low-density polyethylene (LDPE) wax obtained through depolymerization of low-density polyethylene resin.
- LLDPE wax: linear low-density polyethylene (LLDPE) wax obtained through depolymerization of linear low-density polyethylene resin.
- HDPE wax: high-density polyethylene (HDPE) wax obtained through depolymerization of high-density polyethylene resin.
- Oxidized LDPE wax: oxidized low-density polyethylene (LDPE) wax obtained through oxidation of low-density polyethylene wax.
- Oxidized LLDPE wax: oxidized linear low-density polyethylene (LLDPE) wax obtained through oxidation of linear low-density polyethylene wax; and
- Oxidized HDPE wax: oxidized high-density polyethylene (HDPE) wax obtained through oxidation of high-density polyethylene wax.

The process described in this patent can also generate polyethylene or polypropylene polyolefin waxes having the characteristics required to be subjected to rigorous bio-based content tests, following the ASTM D 6866 standard guidelines. This evaluation method provides accurate results of the biogenic or bio-based carbon content, which represents carbon from renewable sources and in direct balance with CO₂ from the atmosphere. It is as if this carbon was captured directly from nature, contributing to a sustainable cycle.

Proceeding with the patent process applied for herein, the depolymerized and biodegradable polyethylene waxes can be oxidized, while maintaining the biodegradability characteristic in a short period of time, and can be emulsified or dispersed in the already existing and known state of the art, enabling the use thereof in liquid, semi-pasty or pasty form and expanding the range of possible uses in the different types of applications that require the employment and use thereof.

The products obtained by this patent application, having the characteristics described above, will create a circular economy in the polyolefin resin chain, whether polyethylene or polypropylene resin, closing the disposal cycle especially if the resins used to produce said waxes originate from fossil material, such as, for example, petrochemical naphtha.

The thermoplastic resins may originate from virgin petrochemical resins from naphtha or any other type of process that generates a raw material that can produce these polyethylene and polypropylene resins, off-grade petrochemical resins, industrial post-consumer waste (also known as shavings or other names commonly applied by the market to this waste) and urban post-consumer waste (also known as urban plastic waste); or any type of mixture thereof, in any proportion, which may vary between 1% and 99% proportion for each type of material, or any source of polyethylene and polypropylene resin that allows subsequent use thereof in this type of process, which is the object of this patent application.

The final disposal of the materials, which are the object of this patent application, will not be a problem for the environment surrounding them, as they will all be biodegradable in a short period of time.

Considering the current state of the art, this invention aims to provide a technology that makes it possible to transform polyethylene and polypropylene thermoplastic resins existing in everyday life, whether virgin petrochemical resins from naphtha or any other type of process that generates a raw material that can produce these polyethylene and polypropylene resins, off-grade petrochemical resins, industrial post-consumer waste (also known as shavings or other names commonly applied by the market to this waste) and urban post-consumer waste (also known as urban plastic waste); or any type of mixture thereof, in any proportion, or any source of polyethylene and polypropylene resin that allows subsequent use thereof in this type of process, which is the object of this patent application, into materials called polyethylene waxes within a very well-defined viscosity range and molecular weight, which allows the use thereof in most of the common applications for polyethylene waxes found on the market such as adhesives, plastic processing, products for cleaning and polishing surfaces, paints and varnishes, printing inks, paper manufacturing, cardboard manufacturing, packaging manufacturing in general, rubber, latex, wood finishing, fruit coating, food coating, flower coating, textile industry in general, leather industry, whether in finishing thereof or in the several steps thereof, construction industry, electroplating processes, plaster industry, silica and mineral filler industry, cosmetic industry, pharmaceutical industry, asphalt paving industry; among other possible known applications of polyethylene and polypropylene waxes in the current state of the art; providing, however, a biodegradability characteristic in a short period of time, a characteristic that is highly sought presently in all technical applications that require the use of polyolefin waxes.

The process for obtaining depolymerized polyethylene and polypropylene polyolefin waxes is illustrated in Fig. 32; said process comprising a 1^{st} step defined as selection of raw material, which may be one of the group of thermoplastic resins including virgin petrochemical resins from naphtha or any other type of process that generates a raw material that can produce these polyethylene and polypropylene resins, off-grade petrochemical resins, industrial post-consumer waste (also known as shavings or other names commonly applied by the market to this waste) and urban post-consumer waste (also known as urban plastic waste); or any type of mixture thereof, in any proportion; followed by a 2^{nd} step defined as feeding the raw material to the reactor (extruder) (D); followed by a 3^{rd} step wherein the depolymerization reaction occurs; followed by a 4^{th} step of temperature and pressure controls; followed by a 5^{th} step wherein viscosity control occurs; followed by a 6^{th} step wherein the final product is obtained (depolymerized wax).

The characteristics that will be imparted to polyolefin waxes, whether made of polyethylene or polypropylene and obtained by the processes described in this patent, are very important and differ from those previously presented in the state of the art, as such characteristics will feature, as a consequence, intrinsic aspects of the waxes that take them to a level of quality and applicability higher than the materials previously presented to the market for the same types of application, manufactured using methods already described in other patents mentioned herein.

In this thermal depolymerization process, the temperature, viscosity and pressure controls, performed through an automated system (PID) during the reaction, are important to ensure that at the end of the process the depolymerized waxes have specific and important chemical characteristics. In order to achieve the purpose described in this patent application, this invention adopts:

### THE REACTOR

The reactor system used to develop this technology, which is the object of this patent application, is described in Fig. 1, 2, 3 and 4.

The use of systems with extruders aiming at obtaining depolymerized or cracked polyolefin waxes has already been described in a number of patents as described in the topic "STATE OF THE ART". However, it is not enough to simply install this equipment and feed it with thermoplastic resins at high temperatures to obtain polyolefin waxes. When performing the procedure in this fashion, the waxes obtained will suffer a number of problems with subsequent physical and chemical characteristics, such as: variable viscosities throughout the process (the viscosity of a polyethylene wax is determined at a fixed temperature, generally 140°C ).

As a direct consequence of viscosity, the molecular weight of these waxes will also vary greatly. The fact that viscosity and molecular weight of materials made from polyethylene and polypropylene are intimately linked is widely known in the current state of the art. The melting (°C), dropping (°C) and softening (°C) points may vary in value over time. Density (g/cm³) may be affected. Hardness (dmm) of waxes produced, as well as the crystallinity (%) thereof, will not always be constant. The physical and chemical characteristics, having excellent quality and that meet the current market needs, mainly the production batch-to-batch reproduction, will be compromised.

The technology that is the object of this patent application features a solution to resolve all these issues. The machine configuration featured in Table 01, the adoption of the pressure and temperature transducer system (Fig. 04), as well as the adoption of the industrial viscometer (F) system described in Fig. 05 will fully control the process and guarantee that the polyethylene and polypropylene polyolefin waxes produced will have all the characteristics desired by the market and described in this patent application.

### THE TEMPERATURE

The simple definition of a depolymerization temperature range, as occurs in some existing patent applications cited in the topic "STATE OF THE ART", is not enough to achieve the important characteristics described above; in this case, temperature control is required to be performed directly in the dough, in the equipment core directly contacting the product.

When controlling the viscosity required to obtain waxes with the characteristics described in this patent application, temperatures automatically need to be defined (see Table 01); otherwise, the process described herein will not generate the products required, being biodegradable and in line with the best in terms of polyolefin waxes in the current state of the art.

**TABLE 01: Heating areas of the production system object of this patent application via extruder.**

| Area | 01 | 02 | 03 | 04 | 05 | 06 | 07 | 08 | 109 | 10 |
|---|---|---|---|---|---|---|---|---|---|---|
| Temperature (°C) | 185 to 210 | 275 to 295 | 380 to 390 | 450 to 500 | 450 to 500 | 450 to 500 | 300 to 350 | 200 to 250 | 150 to 180 | 150 to 180 |

### THE VISCOSITY AND MOLECULAR WEIGHT

Accuracy in the final viscosity range is an extremely important factor in the correct definition of the material to be produced, in order to make it biodegradable in a short period of time.

For viscosity measurements, an industrial viscometer (F) was used, which must be coupled to the end of the production line next to the material discharge, as described in Fig. 05, said viscometer containing an automatic data collection system for production analysis and programming. The development and installation of this industrial viscometer (F) in line automates the process, increases productivity, reduces production costs, improves reproducibility of the material over time and eliminates the need for human hands in process control.

This type of equipment or similar are already known and applied in several types of industrial processes such as: paints and varnishes, printing inks, polymers and slurries, food manufacturing and lubricant manufacturing. However, as for wax depolymerization, there is no knowledge of use of this type of equipment for process control and improvement, and it is not mentioned in any patent previously described in the topic

### "STATE OF THE ART".

Fig. 05 shows an industrial viscometer (F) comprising:
- 01 display and communicator system to be connected to a PLC (A).
- 01 connection and data passing cable (B).
- 01 temperature and viscosity sensor and meter system (C).
- Viscosity measurement range: 3 to 3,000 cP.
- Measurement units: cP, cSt, mPa.s (configurable system).
- Operating temperature: 250°C to 300°C (temperature for the wax to exit from the reactor (D)).
- Operating pressure: 15 bars (200 psi).
- Analog output: 4 to 20 mA; and
- Connection system: ¾" NPT.

And comprising an automatic data collection system for production analysis and programming.

### THE USE OF PRESSURE DURING THE PROCESS

The use of pressure during the process can help achieve certain desired characteristics in the waxes produced. However, pressure regulation during the process is less relevant than the correct definition of viscosity and other parameters already discussed in this patent. Excessive pressure during production can force the process yield, increasing the amount produced unnecessarily and destabilizing the process control created by the industrial viscometer (F). Therefore, the best way to act on the pressure variable is to establish its parameters and fix it within a range of 0 to 350 bars.

Pressure control can be performed through a pressure and temperature transmitter (Fig. 04, (E)), which remotely controls the pressure in the process, and degassing systems can be used to relieve pressure. The issue of maintaining stable pressure is more sensitive when using post-consumer materials that may contain, for example, moisture, even on a small scale, which may generate pressure changes at high process temperatures.

Fig. 04 shows a transducer with the following characteristics:
- Scale from: 0 to 3,000 bars.
- Operating temperature: 538°C.
- Output signals: mV/V, 4-20mA, 0-10V, "Strain-Gauge", "CANOpen", "IO-LINK" type; and
- Connection system: ¼" NPT.

### THE USE OF CATALYSTS

Unlike most depolymerization processes (see topic "STATE OF THE ART"), the process described in this patent application does not use a specific chemical catalyst to obtain depolymerized waxes.

### THE CREATION OF AN IMPORTANT REACTIVE CHEMICAL CENTER

Through the process described in this patent, during depolymerization, the creation of a reactive chemical center will occur in the molecules of the polyethylene wax in formation, which is important for subsequent oxidation thereof (Fig. 13/14/15/16/17/18) and transformation into an oxidized polyethylene wax of excellent quality (Fig. 19/20/21/22/23/24), similar to oxidized waxes produced in traditional oxidation processes made with polyethylene waxes produced by traditional polymerization processes.

The creation of these reactive chemical centers can be shown through an infrared (IR) analysis (Fig. 13/14/15/16/17/18) comparative between the raw material used, whether low-density polyethylene (LDPE) resin or linear low-density polyethylene (LLDPE) resin or high-density polyethylene (HDPE) resin of any origin and the depolymerized wax obtained.

The advantage of creating such reactive chemical centers will be apparent in the subsequent production of oxidized polyethylene waxes, and this is shown through comparative infrared (IR) analyzes (Fig. 19/20/21/22/23/24).

Regarding the analysis of polyethylene resins via infrared (IR), there are many bibliographic references, including on the Internet, which can serve as a reference to support the infrared (IR) analyzes presented in this patent, as described in the web links:
- Web link 04: -https://www.researchgate.net/figure/b-Infrared-spectrum-of-polyethylene-backing _fig2_317407586;
- Web link 05: - https://www.researchgate.net/figure/FTIR-spectra-of-HDPE-samples_fig62_245327026 ;
- Web link 06: - https://andersonmaterials.com/fig4-plastic-bag-red-strip-and-pe-ftir-spectrum/; e
- Web link 07: - https://www.spectroscopyonline.com/view/the-infrared-spectra-of-polymers-ii-polyethylene.

Among the sources available for consultation, it was used, particularly to better characterize the state of the art, "The Infrared Spectra of Polymers II: Polyethylene", Published on September 1, 2021, by Brian C. Smith, Spectroscopy, September 2021, Volume 36, Issue 9, Pages: 24-29", wherein the definition of infrared (IR) for different polyethylene resins is determined.

Considering the above, an important observation should be made regarding the fact that the infrared bands (cm⁻¹) may undergo small changes in values due to the type of equipment, the accuracy range thereof, among other factors. What matters is the band location range, which ends up characterizing the material under analysis.

According to the examples below, it is understood that the main bands (cm⁻¹) in analyzes of a polyethylene resin have the following values:
- CH₂ asymmetric C-H stretch - LDPE (2,917), LLDPE (2,915), HDPE (2,919).
- CH₂ symmetric C-H stretch - LDPE (2,852), LLDPE (2,847), HDPE (2,850).
- CH₂ "bending mode" - LDPE (1,471), LLDPE (1,472/1,463), HDPE (1,472/1,464) - indicative of crystallinity.
- CH₃ "umbrella mode" - LDPE (1,377), LLDPE (1,368).
- Split CH₂ - LLDPE (729), HDPE (730); and
- CH₂ Rock - LDPE (718), LLDPE (719), HDPE (720).
Wherein LDPE is low-density polyethylene, LLDPE is linear low-density polyethylene and HDPE is high-density polyethylene.

### THE OXIDATION OF DEPOLYMERIZED WAX TO OBTAIN AN OXIDIZED WAX

Oxidation of polyethylene waxes, whether low-density polyethylene (LDPE), linear low-density polyethylene (LDPE) or high-density polyethylene (HDPE), is performed in an oxidation reactor known in the current state of the art (not illustrated) and mentioned in the description of Fig. 33.

Represented below (Representation 01) is a sequencing of chemical reactions and formation of chemical groups in a polyolefin wax oxidation system.

Representation 01 - Sequencing of Chemical Reactions and Formation of Chemical Groups in a Polymeric Wax Oxidation System (wherein >>>>= "transition to").

### REPRESENTATION 01:

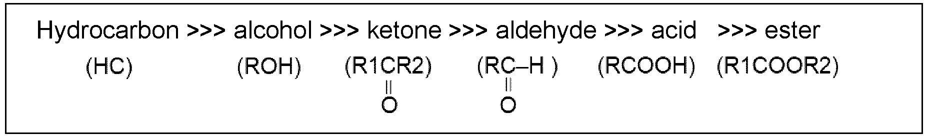

According to Representation 01 above, the natural order of an hydrocarbon (HC) oxidation should go through the steps of alcohol (ROH), ketones (R1COR2), aldehyde (RCO) and then reach the acid step (RCOOH), and if the reaction continues the same, it will go in the direction of ester formation (R1COOR2). Reduction in the steps of alcohol (ROH), ketones (R1COR2) and aldehyde (RCO), thus avoiding their secondary and parallel reactions, leads to the formation of acid groups (RCOOH) more quickly, and this is exactly what is expected to be demonstrated with accelerated phase two (described in Fig. 25).

By accelerating phase two (Fig. 25), the desired final acid value is reached more quickly, and the reaction does not need to take more time, which can lead to the formation, in parallel, of ester groups (R1COOR2) that are also not desired in large quantities.

Continuing with the analysis of an oxidation system in polyolefin waxes, initially, there is phase one (Fig. 25) wherein the presence of auxiliaries such as reaction primers, together with the system temperature and pressure, helps the system to create conditions for a continuity of reaction propagation to occur. After an initial period of time, phase two takes place (Fig. 25) wherein the acid value (AV) begins to rise in value. This rise is initially more pronounced, but over time it decreases until the reaction enters phase three (Fig. 25) wherein little increase in the acid value (AV) will occur.

The main goal in an oxidation reaction is to accelerate it and produce the oxidized wax in the shortest possible time (accelerated phase one and accelerated phase two) (Fig. 25).

In phase one or initiation, the oxidation reaction in the presence of primers will induce the formation of free radicals or unsaturated groups in the chains of the wax being oxidized. This step is a slower step. In the next propagation step, free radicals and unsaturated groups compete with each other to form secondary hydroperoxides, which are largely responsible for increasing the acid value (AV) of the system through their subsequent transformation into acidic groups (RCOOH).

This step needs to be accelerated, in terms of time, as much as possible, as there is a presence in the system of unsaturated chains such as olefins, vinylidenes, among others (shown in Fig. 13/14 (LDPE), 15/16 (LLDPE) and 17/18 (HDPE).

If the system reacts for a long time, this type of chain, with double bonds, can lead to a secondary reaction of formation of cross-linked systems due to interactions between the double bonds existing in the chains. For this reason, accelerating step two (Fig. 25) is very important, as these unsaturated chains such as olefins, vinylidenes, among others, instead of tending to cross-link, will form acid radicals (R1COOH) and assist in the reaction and consequent increase in the acid value (AV) as a whole. In other words, the presence of unsaturated groups in the oxidative system can help to accelerate the reaction, as long as it occurs quickly and efficiently. In this way, instead of impairing the reaction, tending to crosslink formation, these unsaturated groups will help to increase system oxidative efficiency towards the formation of the desired acid groups (RCOOH).

The difference of this patent application in relation to the current state of the art lies in the fact that the depolymerization process described herein will generate reactive centers, already previously described, in favor of a faster and more complete reaction from the perspective of oxidation of polyolefin waxes.

Due to the characteristics generated by the depolymerization process described in this patent, the production of oxidized polyethylene waxes will occur with a short reaction time, with a much lower process cost, with greater productivity, with an SV/AV (saponification value | acid value) ratio lower, greatly increasing the useful life of the equipment used for the oxidation process and with a higher quality level, very similar to the high quality materials currently found on the market and manufactured in the existing and known state of the art.

In an polyethylene wax oxidation reaction, the fastest path to greater oxidative efficiency is the formation of sites containing carboxylic acid functions in the polyethylene wax molecule. These groups are generally represented as (R1COOH). Due to the diverse and possible concomitant reactions, during the oxidation process, a reaction imbalance will occur towards the formation of sites containing carboxylic ester functions in this same polyethylene wax molecule. These groups are generically represented as (R1COOR2). Considering that one of the possible subsequent applications of oxidized polyethylene waxes is the manufacture of emulsions for different types of applications, the more ester groups (R1COOR2) are formed, the more will be formed to the detriment of carboxylic acid groups (R1COOH). It turns out that carboxylic acid groups (R1COOH) are important to help the subsequent formation of stable emulsions that can be well used during application. The process adopted for producing oxidized polyethylene waxes for subsequent emulsion is the measurement of the acid value (see contents of Fig. 25). Acid value ranges between 5.0 and 45.0 mg KOH/g of wax are generally accepted as a good range for subsequent emulsion process, and they can range from 10.0 to 35.0 mg KOH/g of wax, preferably from 16.0 to 25.0 mg KOH/g of wax.

Another typical characteristic of reactions during a polyethylene wax oxidation process is that the longer the reaction time to reach the desired acid value range, the greater the loss of chemical balance of reactions during oxidation for greater formation of ester groups (R1COOR2) to the detriment of carboxylic acid groups (R1COOH); in other words, a rapid oxidation reaction that reaches the desired acid value range as soon as possible is the most desired type of process (see contents of Fig. 19, 20, 21, 22, 23 and 24).

Another way of measuring process improvement in the oxidation of polyethylene waxes is through the existing relationship, in oxidized waxes, of the saponification value to the acid value, SV (saponification value)/AV (acid value). The lower the SV/AV ratio, the faster and more assertive the oxidation process was, and the more acid groups (R1COOH) were formed to the detriment of ester groups (R1COOR2). This relationship is directly linked to greater efficiency of the oxidation reaction, as described in previous paragraphs.

Proceeding with the patent process applied for herein, such oxidized polyethylene waxes, having biodegradability characteristics in a short period of time, can be emulsified or dispersed in the already existing and known state of the art, enabling the use thereof in liquid, semi-pasty or pasty form and expanding the range of possible uses in the different types of applications that require the employment and use thereof in emulsified or dispersed forms, as depicted in Fig. 34 and 35, respectively.

Fig. 34 shows an emulsified wax production process, comprising a 1^{st} step defined as selection of raw material (oxidized wax); followed by a 2^{nd} step defined as feeding the raw material to the emulsion reactor; said raw material being an oxidized wax, the manufacturing method of which is covered in this patent application; followed by a 3^{rd} step wherein the wax emulsion occurs; followed by a 4^{th} step of temperature, pressure and emulsifying system adjustments; followed by a 5^{th} step of sampling collection in a plate heat exchanger; followed by a 6^{th} step wherein the final product is obtained (emulsified wax).

Fig. 35 shows a dispersed wax production process, comprising a 1^{st} step defined as selection of raw material (oxidized wax); followed by a 2^{nd} step defined as feeding the raw material to the dispersion reactor; said raw material being an oxidized wax, the manufacturing method of which is covered in this patent application; followed by a 3^{rd} step wherein the wax dispersion occurs; followed by a 4^{th} step of temperature, pressure and emulsifying system adjustments; followed by a 5^{th} step of sampling collection in a plate heat exchanger; followed by a 6^{th} step wherein the final product is obtained (dispersed wax).

### DETERMINATION OF ACID VALUE (AV) AND SAPONIFICATION VALUE (SV)

Acid value and saponification value are characteristics of oxidized waxes, and the measurement method thereof is already well-known in the current state of the art. The acid value can be measured using the ASTM D 1386 standard - "Acid Number (Empirical) of Synthetic and Natural Waxes". The saponification value can be measured using the ASTM D 1387-89 standard - "Standard Test Method for Saponification Number (Empirical) of Synthetic and Natural Waxes".

### EXAMPLES OF WHAT IS DESCRIBED IN THIS PATENT APPLICATION

### EXAMPLE 01:

A low-density polyethylene (LDPE) resin was depolymerized at different temperature levels.

The material used in this example is manufactured by Braskem and is called Low-Density Polyethylene PB 608. The material is characterized below in Table 02:

**TABLE 02:**

| Characteristic | Method | Unit | Values |
|---|---|---|---|
| Flow index (190°C/2.16 kg) | D 1238 | g/10 min | 30 |
| Density | D 792 | g/cm³ | 0.915 |
| Shore Hardness D (6 mm) | D 2240 | ---- | 42 |
| Thermal deflection temperature at 0.455 Mpa (3 mm) | D 648 | °C | 43 |
| Vicat softening temperature at 10 N (3mm) | D 1525 | °C | 82 |

In this example, pressure during depolymerization must be in a range from 1 atm to a maximum 10 atm and remain stable during the process.

Viscosity measurements were taken at the following temperatures: room temperature (resin as is), 360°C, 370°C, 380°C, 390°C, 400°C, 410°C, 420°C, 430°C, 440°C; (Fig. 26).

Using the OECD 301B methodology - Immediate Biodegradability, the material is now considered 100% biodegradable in a short period of time of up to 28 days. After 28 days, it is observed that biodegradability begins to decline, demonstrating the trend of what is already known, that the original material, i.e., the polyethylene resin, takes between 100 and 150 years to be completely eliminated from the environment (Fig. 27/28/29/30).

### EXAMPLE 02:

A linear low-density polyethylene (LLDPE) resin was depolymerized at different temperature levels.

The material used in this example is manufactured by Braskem and is called Linear Low-Density Polyethylene IF 33. The material is characterized below in Table 03:

**TABLE 03:**

| Characteristic | Method | Unit | Values |
|---|---|---|---|
| Flow index (190°C/2.16 kg) | D 1238 | g/10 min | 48 |
| Density | D 1505 | g/cm³ | 0.931 |
| Shore Hardness D (6 mm) | D 2240 | ---- | 51 |
| Thermal deflection temperature at 0.455 Mpa (3 mm) | D 648 | °C | 52 |
| Vicat softening temperature at 10 N (3mm) | D 1525 | °C | 100 |

In this example, pressure must be in a range from 1 atm to a maximum 10 atm and remain stable during the process.

Viscosity measurements were taken at the following temperatures: room temperature (resin as is), 360°C, 370°C, 380°C, 390°C, 400°C, 410°C, 420°C, 430°C, 440°C; (Fig. 26).

Using the OECD 301B methodology - Immediate Biodegradability, the material is now considered 100% biodegradable in a short period of time of up to 28 days. After 28 days, it is observed that biodegradability begins to decline, demonstrating the trend of what is already known, that the original material, i.e., the polyethylene resin, takes between 100 and 150 years to be completely eliminated from the environment (Fig. 27/28/29 /30).

### EXAMPLE 03:

A high-density polyethylene (HDPE) resin was depolymerized at different temperature levels.

The material used in this example is manufactured by Braskem and is called High-Density Polyethylene IB 58. The material is characterized below in Table 04.

**TABLE 04:**

| Characteristic | Method | Unit | Values |
|---|---|---|---|
| Flow index (190°C/2.16 kg) | D 1238 | g/10 min | 35 |
| Density | D 792 | g/cm³ | 0.958 |
| Shore Hardness D (6 mm) | D 2240 | ---- | 65 |
| Thermal deflection temperature at 0.455 Mpa (3 mm) | D 648 | °C | 69 |
| Vicat softening temperature at 10 N (3mm) | D 1525 | °C | 127 |

In this example, pressure must be in a range from 1 atm to a maximum 10 atm and remain stable during the process.

Viscosity measurements were taken at the following temperatures: room temperature (resin as is), 360°C, 370°C, 380°C, 390°C, 400°C, 410°C, 420°C, 430°C, 440°C; (Fig. 26).

The viscosity results obtained are shown in Fig. 26.

Using the OECD 301B methodology - Immediate Biodegradability, the material is now considered 100% biodegradable in a short period of time of up to 28 days. After 28 days, it is observed that biodegradability begins to decline, demonstrating the trend of what is already known, that the original material, i.e., the polyethylene resin, takes between 100 and 150 years to be completely eliminated from the environment (Fig. 27/28/29 /30).

### EXAMPLE 04:

A high-density polyethylene (HDPE) resin was depolymerized at different temperature and pressure levels.

The material used in this example is an post-consumer off-grade material obtained on the market.

Characterization of post-consumer off-grade HDPE resin is a bit difficult via specification, as these materials do not usually have specifications published by suppliers. A way found to characterize post-consumer off-grade HDPE resin was through a comparative DSC ("Differential Scanning Calorimetry") test, which is a method wherein the material to be analyzed is subjected to an analysis of differential scanning calorimetry, which is a technique in which the difference in electrical power or heat flux between a sample and a reference material is measured as a function of temperature using a differential calorimeter, which makes an accurate measurement of the transition heat between these materials.

This post-consumer off-grade material was compared with the HDPE resin of Example 03, High-Density Polyethylene IB 58. This way, the comparison chart in Fig. 31 was obtained, demonstrating the similarity between the post-consumer off-grade HDPE resin and a typical HDPE resin commercially available on the market.

In this example, pressure must be in a range from 1 atm to a maximum 10 atm and remain stable during the process.

Viscosity measurements were taken at the following temperatures: room temperature (resin as is), 360°C, 370°C, 380°C, 390°C, 400°C, 410°C, 420°C, 430°C, 440°C (Fig. 26).

Example 04 confirms the efficacy of the process described in this patent for different types of polyethylene resins, regardless of the origin thereof.

### EXAMPLE 05:

The depolymerized linear low-density polyethylene (LLDPE) resin of Example 02 was oxidized as follows:
- Temperature: 135°C - 140°C.
- Pressure: 5.0 to 6.0 atm.
- Primer: acetic acid; and
- Primer dosing: 0.3% at the beginning of the oxidation process only.

The material is left to react, under such conditions, between 8 and 10 hours, thus obtaining an oxidized LLDPE wax with an acid value between 15 and 17 mg KOH/g of wax, a saponification value between 42 and 45 mg KOH/g of wax, a SV/AV between 2.80 and 3.00, a melting point between 106 to 114°C and a viscosity of 300 to 400 cps. In this process, viscosity needs to be very well controlled, as it can change upwards during the oxidation process, making the production of oxidized wax unfeasible.

This material has a good characteristic to be sold on the market, but it is not yet in the desired condition of excellence compared to the main materials sold.

### EXAMPLE 06:

The depolymerized linear low-density polyethylene (LLDPE) resin of Example 02 was oxidized as follows:
- Temperature: 135°C - 140°C.
- Pressure: 5.0 to 6.0 atm.
- Primer: acetic acid; and
- Primer dosing: 0.3% at the beginning of the oxidation process and then 0.3% every hour until the oxidation reaction is complete, reaching the desired acid value (AV).

The material is left to react, under such conditions, for 3.5 - 4.5 hours, thus obtaining an oxidized LLDPE wax with an acid value between 15 and 17 mg KOH/g of wax, a saponification value between 28 and 30 mg KOH/g of wax, a SV/AV between 1.80 and 2.00, a melting point between 106 and 114°C and a viscosity of 200 to 250 cps.

The material obtained in Example 06 was made in a shorter reaction time, with a much better SV/AV ratio and with a controlled viscosity throughout the oxidation process, serving as an illustration for what is described in this patent application.

This material is in a condition of desired excellence compared to the main commercialized materials and exemplifies the patent application described herein.

The examples above illustrate the efficacy of the patent process applied for herein and demonstrate that all the steps described herein bring some type of benefit to the process as a whole.

In summary, the polyolefin wax depolymerization process, and the subsequent oxidation thereof, is able to generate products of excellent final quality, compatible with the excellent products found on the market, biodegradable and able to create circular economy.

### INDEX OF LINKS CITED

Web link 01 - https://www.spectroscopyonline.com/view/the-infrared-spectra-of-polymers-ii-polyethylene
Web link 02 - https://www.spectroscopyonline.com/view/the-infrared-spectra-of-polymers-ii-polyethylene
Web link 03 - https://www.spectroscopyonline.com/view/the-infrared-spectra-of-polymers-ii-polyethylene
Web link 04 - https://www.researchgate.net/figure/b-Infrared-spectrum-of-polyethylene-backing fig2 317407586
Web link 05 - https://www.researchgate.net/figure/FTIR-spectra-of-HDPE-samples_fig6_245327026
Web link 06 - https://andersonmaterials.com/fig4-plastic-bag-red-strip-and-pe-ftir-spectrum/
Web link 07 - https://www.spectroscopyonline.com/view/the-infrared-spectra-of-polymers-ii-polyethylene.

## Claims

1. Process for preparing polyethylene and polypropylene polyolefin waxes by thermal depolymerization of polyethylene and polypropylene thermoplastic resins having characteristics of accelerated biodegradability, wherein it is used for preparing polyethylene and polypropylene polyolefin waxes by thermal depolymerization of polyethylene and polypropylene thermoplastic resins, and particularly preparing polyethylene waxes within a certain specified viscosity range and molecular weight that transform them into 100% biodegradable polyethylene waxes in a period of time of less than 30 days; the process comprising a 1^{st} step defined as selection of raw material; followed by a 2^{nd} step defined as feeding the raw material to the reactor (extruder) (D); followed by a 3^{rd} step wherein the depolymerization reaction occurs; followed by a 4^{th} step of temperature and pressure controls; followed by a 5^{th} step wherein viscosity control occurs; followed by a 6^{th} step wherein the final product is obtained (depolymerized wax).

2. Process for preparing polyethylene and polypropylene polyolefin waxes by thermal depolymerization of polyethylene and polypropylene thermoplastic resins having characteristics of accelerated biodegradability, according to claim 1, wherein the polyethylene and polypropylene polyolefin waxes obtained by this process can also generate polyethylene or polypropylene polyolefin waxes having the characteristics required to be subjected to bio-based content tests, following steps 1 to 6.

3. Process for preparing polyethylene and polypropylene polyolefin waxes by thermal depolymerization of polyethylene and polypropylene thermoplastic resins having characteristics of accelerated biodegradability, according to claim 1, wherein the polyethylene and polypropylene polyolefin waxes originate from petrochemical virgin resins from naphtha or any other type of process that generates a raw material that can produce these polyethylene and polypropylene resins, which include off-grade petrochemical resins, industrial post-consumer waste and urban post-consumer waste or any mixtures thereof, which may vary between 1% and 99% proportion for each type of material.

4. Process for preparing polyethylene and polypropylene polyolefin waxes by thermal depolymerization of polyethylene and polypropylene thermoplastic resins having characteristics of accelerated biodegradability, according to claim 1, wherein the polyethylene and polypropylene polyolefin waxes obtained by this process originate from a single resin or mixtures of polyethylene and polypropylene polyolefin resins.

5. Process for preparing polyethylene and polypropylene polyolefin waxes by thermal depolymerization of polyethylene and polypropylene thermoplastic resins having characteristics of accelerated biodegradability, according to claim 1, wherein to have 100% biodegradable characteristics in a period of time of less than 30 days, the polyethylene and polypropylene polyolefin waxes obtained by this process require a production process based on the final viscosity range.

6. Process for preparing polyethylene and polypropylene polyolefin waxes by thermal depolymerization of polyethylene and polypropylene thermoplastic resins having characteristics of accelerated biodegradability, according to claim 1, wherein it comprises a viscosity control during the production process, said control to be performed by a system with an industrial viscometer (F) that is coupled to the end of the production line, next to the material discharge.

7. Process for preparing polyethylene and polypropylene polyolefin waxes by thermal depolymerization of polyethylene and polypropylene thermoplastic resins having characteristics of accelerated biodegradability, according to claim 1, wherein an industrial viscometer (F), through a PLC (Programmable Logic Controller) system equipped with a PID (Proportional Integral Derivative) logic, controls an automatic data collection system for production analysis and programming.

8. Process for preparing polyethylene and polypropylene polyolefin waxes by thermal depolymerization of polyethylene and polypropylene thermoplastic resins having characteristics of accelerated biodegradability, according to claim 1, wherein the pressure during process is kept stable within a range from 0 to 350 bars.

9. Process for preparing polyethylene and polypropylene polyolefin waxes by thermal depolymerization of polyethylene and polypropylene thermoplastic resins having characteristics of accelerated biodegradability, according to claim 1, wherein it is performed in modular production cells (tons/year).

10. Process for preparing polyethylene and polypropylene polyolefin waxes by thermal depolymerization of polyethylene and polypropylene thermoplastic resins having characteristics of accelerated biodegradability, according to claim 1, wherein, during depolymerization, in the polyethylene wax obtained by this process, a creation of a reactive chemical center occurs in the molecules of polyethylene waxes in formation that will determine the subsequent oxidation thereof and transformation into an oxidized polyethylene wax with 100% biodegradability in a period of time of less than 30 days; the process comprising a 1^{st} step defined as selection of raw material (depolymerized wax); followed by a 2^{nd} step defined as feeding the raw material to the oxidation reactor; followed by a 3^{rd} step wherein the oxidation reaction occurs; followed by a 4^{th} step of temperature, pressure, primer and air injection adjustments; followed by a 5^{th} step wherein acid value (AV) control occurs; followed by a 6^{th} step wherein the final product is obtained (oxidized wax).

11. Process for preparing polyethylene and polypropylene polyolefin waxes by thermal depolymerization of polyethylene and polypropylene thermoplastic resins having characteristics of accelerated biodegradability, according to claim 10, wherein the oxidation reaction produces oxidized waxes with lower SV/AV (Saponification Value/Acid Value).

12. Process for preparing polyethylene and polypropylene polyolefin waxes by thermal depolymerization of polyethylene and polypropylene thermoplastic resins having characteristics of accelerated biodegradability, according to claim 1, wherein it results in obtaining oxidized waxes, having 100% biodegradability characteristic in a period of time of less than 30 days, being subsequently emulsified or dispersed in an aqueous medium, while maintaining the biodegradability characteristics in a period of time of less than 30 days, such as the original oxidized waxes; the process comprising a 1^{st} step defined as selection of raw material (oxidized wax); followed by a 2^{nd} step defined as feeding the raw material to the emulsion reactor; followed by a 3^{rd} step wherein wax emulsion occurs; followed by a 4^{th} step of temperature, pressure and emulsifying system adjustments; followed by a 5^{th} step of sampling collection in a plate heat exchanger; followed by a 6^{th} step wherein the final product is obtained (emulsified wax); alternatively, for obtaining dispersed waxes, the process comprises a 1^{st} step defined as selection of raw material (oxidized wax); followed by a 2^{nd} step defined as feeding the raw material to the dispersion reactor; followed by a 3^{rd} step wherein wax dispersion occurs; followed by a 4^{th} step of temperature, pressure and emulsifying system adjustments; followed by a 5^{th} step of sampling collection in a plate heat exchanger; followed by a 6^{th} step wherein the final product is obtained (dispersed wax).
